# EUROPÄISCHE PATENTSCHRIFT

(11) **EP 1 516 661 B1**
(45) Veröffentlichungstag und Bekanntmachung des Hinweises auf die Patenterteilung: **29.03.2006**
(21) Anmeldenummer: 04104181.5
(22) Anmeldetag: 01.09.2004
(51) Int. Cl.: B01F 7/08, A21C 1/06

(54) **Mischkneter und Verfahren zur Herstellung von Rohteig zur Teigwarenherstellung**
Mixer-Kneader and process for preparing raw dough for preparing pasta
Mélangeur-Melaxeur et procédé pour la préparation d'une pâte crue pour la préparation de pâtes alimentaires

(30) Priorität: 18.09.2003 DE 10343711; 12.03.2004 DE 102004012581
(43) Veröffentlichungstag der Anmeldung: 23.03.2005
(73) Patentinhaber: Bühler AG, 9240 Uzwil (CH)
(72) Erfinder: Seiler, Werner, 9240 Uzwil (CH)
(74) Vertreter: Frommhold, Joachim

(56) Entgegenhaltungen:
- EP-B- 0 426 766
- CH-A- 484 366
- GB-A- 677 208
- US-A- 3 884 881
- US-A1- 2002 075 755

## Beschreibung

Die Erfindung bezieht sich auf einen Mischkneter und ein Verfahren zum Herstellen von Rohteig oder Teig zur Teigwarenherstellung.

Mischkneter und Verfahren, die von der Bühler AG, Uzwil, Schweiz, unter dem Namen "Polymatik" vertrieben werden, sind z.B. aus der EP0351423 und der EP0426766 bekannt. Auch ein Doppelschneckenmischkneter ist aus der US-A-2002/0075755 bekannt.

Bei der Herstellung von Teig zur Herstellung von Teigwaren kommen bei diesem Verfahren stärke- und klebereiweisshaltige Rohmaterialien zum Einsatz. Bei Verwendung klebereiweissfreier stärkehaltiger Rohmaterialien verwendet man in der Regel Hühnerei als Ersatz für das fehlende pflanzliche Klebereiweiss.

Man verwendet z.B. einen zweiwelligen Mischkneter, in dem die stärke- und klebereiweisshaltigen Rohmaterialien zu einem Rohteig gemischt und geknetet werden. Während des Mischens und Knetens ist man bestrebt, ein möglichst stark vernetztes, elastisches Proteingerüst aus Klebereiweiss (Gluten) zu bilden, das sich innerhalb der stärkehaltigen Masse bzw. dem Rohteig erstreckt. Dieses Proteingerüst stellt eine netzartige, räumliche Verkettung von Proteinzellen dar, die eine Matrix bilden, in der weitgehend intakte Stärkekörner (kristalline Stärke) eingeschlossen sind. Das Proteingerüst kann z.B. durch Mischen und Kneten beliebig oft verändert und umgebaut werden, jedoch nur solange einerseits genügend Wasser vorhanden ist und andererseits das wasserunlösliche Protein (Klebereiweiss, Gluten) nicht durch höhere Temperaturen denaturiert bzw. koaguliert ist.

Ab einer bestimmten Temperatur treten nämlich irreversible Veränderungen der Teigkomponenten auf. So erfolgt eine Gelatinierung der Stärke mit dem im Rohteig vorhandenen Wassergehalt ("Wasserüberschuss") bei Temperaturen in einem Bereich von 68°C bis 75°C. Die Denaturierung bzw. Koagulation des Proteins setzt schon bei etwa 55°C ein.

Aufgrund der Denaturierungen bzw. Koagulationen des Proteins wird das Protein irreversibel verändert und verliert zumindest einen Teil seiner Kleberfunktion. Deshalb muss im Mischkneter darauf geachtet werden, dass diese Temperaturen an keinem Ort innerhalb des Mischkneters erreicht werden.

Der in dem Mischkneter hergestellte viskoelastische Rohteig wird dann zunächst entgast und anschliessend mittels einer Einwellen-Schneckenpresse bei Drücken von z.B. 80 bis 120 bar durch eine Pressform gedrückt, ggf. auf eine gewünschte Länge geschnitten und getrocknet.

Ein während des Mischens und Knetens optimal ausgebildetes Klebergerüst ist für die Teigwarenqualität von herausragender Bedeutung. Die Ausbildung des Klebergerüsts bzw. der Proteinmatrix während des Mischens und Knetens trägt wesentlich zur Elastizität und Bissfestigkeit ("al dente") sowie zur Kochfestigkeit und Unterdrückung der Oberflächenschleimigkeit der gekochten Teigwaren bei.

Der für die Teigqualität kritische Verfahrensabschnitt ist das Mischen und Kneten in dem Mischkneter. Hier muss einerseits ausreichend viel mechanische Energie in Form von Misch- und Knetarbeit in den Rohteig eingetragen werden, damit ein weit verzweigtes Proteingerüst ausgebildet wird. Andererseits darf dabei aber keine thermische Schädigung des Proteins erfolgen.

Schliesslich ist man aber auch bestrebt, den spezifischen mechanischen Energieeintrag in den Rohteig bzw. die Leistungsaufnahme des Mischkneters gering zu halten. Dadurch lassen sich bei dem Verfahren Energiekosten einsparen. Ausserdem können so die elektrischen sowie mechanischen Anforderungen an den Mischkneter, wie z.B. Auslegung des Elektromotors, des Getriebes etc., und der mechanische Verschleiss klein gehalten werden.

Der Erfindung liegt daher die Aufgabe zugrunde, einen Mischkneter und ein Verfahren zur Herstellung von Rohteig für die Teigwarenherstellung der eingangs genannten Art bereitzustellen, die sowohl eine hervorragende Teigwarenqualität als auch eine verbesserte Wirtschaftlichkeit der Teigherstellung ermöglichen.

Diese Aufgabe wird durch den Mischkneter gemäss Anspruch 1 und das Verfahren gemäss Anspruch 39 gelöst.

Im folgenden wird der Begriff "Rohteig" für das im Mischkneter verarbeitete Gemisch aus Rohmaterialien und Wasser verwendet. Der Begriff "Teig" wird für den entgasten und in der Einwellen-Schneckenpresse zu "fertigem Teig" weiterverarbeiteten Rohteig verwendet. Als "Teigwaren" bezeichnet man den speziell geformten Teig (Langware, Kurzware).

Der erfindungsgemässe Mischkneter zur Herstellung von Rohteig, insbesondere aus stärke- und klebereiweisshaltigen Rohstoffen wie Mehl, Griess oder Dunst, besitzt hierfür ein Gehäuse, einen Rohmaterial-Zufuhrabschnitt, einen Rohteig-Austragsabschnitt sowie mindestens zwei miteinander zusammenarbeitende, sich von dem Rohmaterial-Zufuhrabschnitt zu dem Rohteig-Austragsabschnitt innerhalb des Gehäuses in einer Förderrichtung bzw. axialen Richtung erstreckende Arbeitswellen, an denen Misch- und Knetelemente sowie zwangsfördernde Elemente angeordnet sind. Erfindungsgemäss besitzt der Mischkneter-Hohlraum förderaufseitig von seinem Rohteig-Austragsabschnitt einen Bereich zur peristaltischen Teigknetung, der jeweils mindestens einen sich verengenden axialen Hohlraum-Bereich aufweist, in welchem die senkrecht zur axialen Richtung gemessene freie Querschnittsfläche des Hohlraums zwischen der Oberfläche der Arbeitswellen und der Innenwand des Gehäuses von einem Bereich mit grosser freier Querschnittsfläche zu einem Bereich mit kleiner freier Querschnittsfläche entlang der axialen Richtung abnimmt.

Wenn Rohteig durch die förderaufseitig angeordneten zwangsfördernden Elemente durch den Mischkneter gefördert wird, erfolgt in dem sich verengenden axialen Hohlraum-Bereich des Mischkneters eine Dehnung des Teiges. Dieses zumindest "partielle" peristaltische Kneten wirkt sich äusserst positiv auf die Ausbildung des Klebergerüstes und somit auch auf die oben genannten Aspekte der Teigwarenqualität aus. Sie stellt eine Nachahmung der "Handballen-Knetung" dar. Ausserdem bewirkt der aufgrund der Zwangsförderung durch den sich verengenden axialen Hohlraum-Bereich gepresste viskoelastische Rohteig eine wirkungsvolle Abdichtung des Hohlraums des Mischkneters förderaufseitig von seinem Rohteig-Austragsabschnitt. Dadurch lässt sich in einem auf den Mischkneter folgenden Rohteig-Entgasungsbereich ein für die Entgasung benötigtes Vakuum besonders gut aufrechterhalten, und es kann ein tieferer Entgasungsdruck und somit eine wirkungsvollere Entgasung als bei bekannten Mischknetern erreicht werden.

Bei einer besonders vorteilhaften Ausführung besitzt der Mischkneter-Hohlraum in seinem Bereich zur peristaltischen Teigknetung ausserdem jeweils mindestens einen sich aufweitenden axialen Hohlraum-Bereich, der sich förderabseitig an den sich verengenden axialen Hohlraum-Bereich anschliesst und in welchem die senkrecht zur axialen Richtung gemessene freie Querschnittsfläche des Hohlraums zwischen der Oberfläche der Arbeitswellen und der Innenwand des Gehäuses von einem Bereich mit kleiner freier Querschnittsfläche zu einem Bereich mit grosser freier Querschnittsfläche entlang der axialen Richtung zunimmt.

Wenn Rohteig durch die förderaufseitig angeordneten zwangsfördernden Elemente durch den Mischkneter gefördert wird, findet in dem sich aufweitenden Hohlraum eine Rückvermischung des Rohteiges statt, nachdem er den sich verengenden axialen Hohlraum-Bereich des Mischkneters passiert und dabei eine Dehnung erfahren hat. Diese "vollständige" peristaltische Knetung wirkt sich noch positiver als die oben beschriebene partielle peristaltische Mischung auf die Ausbildung des Klebergerüstes und somit auch auf die oben genannten Aspekte der Teigwarenqualität aus. Die für das Entgasungsvakuum notwendige abdichtende Wirkung des Teiges ist dabei nach wie vor gegeben.

Zweckmässigerweise besitzt der Mischkneter-Hohlraum in seinem Bereich zur peristaltischen Teigknetung zwischen dem sich verengenden axialen Hohlraum-Bereich und dem sich aufweitenden axialen Hohlraum-Bereich einen axialen Engpass-Bereich, in welchem die senkrecht zur axialen Richtung gemessene freie Querschnittsfläche des Hohlraums zwischen der Oberfläche der Arbeitswellen und der Innenwand des Gehäuses entlang der axialen Richtung einen minimalen Wert hat. Dieser sich über einen axialen Teilbereich des Gehäuses erstreckende Engpass-Bereich steigert noch die für das Entgasungsvakuum notwendige abdichtende Wirkung des Teiges.

Vorzugsweise besitzt der Mischkneter-Hohlraum in seinem Bereich zur peristaltischen Teigknetung mindestens eine, vorzugsweise zwei bis sechs, axial aufeinanderfolgende Hohlraum-Verengungen, die jeweils aus einem sich verengenden axialen Hohlraum-Bereich sowie einem sich aufweitenden axialen Hohlraum-Bereich bestehen und zur peristaltischen Teig-Knetung dienen. Wenn mehrere sich verengende axiale HohlraumBereiche und mehrere sich aufweitende axiale Hohlraum-Bereiche aufeinanderfolgen, ergibt sich für den zwangsgeförderten Rohteig ein rhythmisches Wechselspiel aus einerseits einem Dehnen und Drücken des Rohteigs in den sich verengenden axialen Hohlraum-Bereichen und andererseits einem Entspannen und Rückvermischen des Rohteigs in den sich aufweitenden axialen Hohlraum-Bereichen. Dadurch wird ein besonders intensives peristaltisches Kneten gewährleistet.

Vorzugsweise besitzt der Mischkneter-Hohlraum in seinem Bereich zur peristaltischen Teigknetung mindestens eine, vorzugsweise zwei bis sechs, axial aufeinanderfolgende Hohlraum-Verengungen, die jeweils aus einem sich verengenden axialen Hohlraum-Bereich, einem axialen Engpass-Bereich und einem sich aufweitenden axialen Hohlraum-Bereich bestehen und zur peristaltischen Teig-Knetung dienen. Wenn mehrere sich verengende axiale Hohlraum-Bereiche und mehrere sich aufweitende axiale Hohlraum-Bereiche mit einem jeweiligen zusätzlichen axialen Engpass-Bereich aufeinanderfolgen, wird bei gleichbleibender Intensität der peristaltischen Knetung eine weitere Verbesserung der Dichtwirkung des zwangsgeförderten Rohteiges erzielt.

Bei einer praktischen Ausführung sind die sich verengenden axialen Hohlraumbereiche des Mischkneters durch axiale Bereiche der Arbeitswellen in ihrem jeweiligen Endabschnitt förderaufseitig von dem Rohteig-Austragsabschnitt gebildet, in denen die senkrecht zur axialen Richtung gemessene Querschnittsfläche der Arbeitswellen entlang der axialen Richtung zunimmt.

Entsprechend sind die sich aufweitenden axialen Hohlraumbereiche des Mischkneters durch axiale Bereiche der Arbeitswellen in ihrem jeweiligen Endabschnitt förderaufseitig von dem Rohteig-Austragsabschnitt gebildet, in denen die senkrecht zur axialen Richtung gemessene Querschnittsfläche der Arbeitswellen entlang der axialen Richtung abnimmt.

Die axialen Bereiche der Arbeitswellen mit entlang der axialen Richtung zunehmender oder abnehmender Wellen-Querschnittsfläche können z.B. in Form gesonderter Elemente vorliegen, die auf die Arbeitswellen drehfest aufgesteckt sind.

Bei einer weiteren praktischen Ausführung sind die sich verengenden axialen Hohlraumbereiche des Mischkneters durch axiale Bereiche des Gehäuses in seinem Endabschnitt förderaufseitig von dem Rohteig-Austragsabschnitt gebildet, in denen die senkrecht zur axialen Richtung gemessene freie Querschnittsfläche des Gehäuse-Innenraums entlang der axialen Richtung abnimmt.

Entsprechend sind auch hierbei die sich aufweitenden axialen Hohlraumbereiche des Mischkneters durch axiale Bereiche des Gehäuses in seinem Endabschnitt förderaufseitig von dem Rohteig-Austragsabschnitt gebildet, in denen die senkrecht zur axialen Richtung gemessene freie Querschnittsfläche des Gehäuse-Innenraums entlang der axialen Richtung zunimmt.

Die axialen Bereiche des Gehäuses mit entlang der axialen Richtung zunehmender oder abnehmender Querschnittsfläche des Gehäuse-Innenraums können z.B. in Form gesonderter Elemente vorliegen, die als Buchsen in dem Gehäuse drehfest eingesetzt sind.

Der Bereich zur peristaltischen Teigknetung kann aber auch sowohl durch die Aufsteckelemente für die Arbeitswellen als auch durch die Einsatzelemente für das Gehäuse gebildet werden. Durch entsprechende "Bausätze" aus Aufsteckelementen und Einsatzelementen kann der Peristaltik-Knetbereich des Mischkneters schnell umgebaut und an verschiedene Anforderungen angepasst werden.

Vorzugsweise die Arbeitswellen an ihrem jeweiligen Endabschnitt förderaufseitig von dem Rohteig-Austragsabschnitt rotationssymmetrisch ausgebildet.

Entsprechend bevorzugt man auch, dass die den Oberflächen der Arbeitswellen gegenüberliegenden Bereiche der Gehäuse-Innenwand am Endabschnitt des Gehäuses förderaufseitig von dem Rohteig-Austragsabschnitt rotationssymmetrisch ausgebildet sind.

Dies ist fertigungstechnisch einfach, und zwar unabhängig davon, ob der Endabschnitt der Arbeitswellen bzw. der Gehäuse-Innenwand einstückig ausgebildet ist oder durch rotationssymmetrische Aufsteckelemente oder Einsatzelemente zusammengesetzt wird.

Je nach Bedarf werden unterschiedliche Längsprofile der Arbeitswellen und/oder der Gehäuse-Innenwand in dem Endabschnitt förderaufseitig von dem Rohteig-Austragsabschnitt gewählt.

So kann der durch die Rotations- und Symmetrieachse der Arbeitswellen verlaufende Längsschnitt der Arbeitswellen an ihrem jeweiligen Endabschnitt förderaufseitig von dem Rohteig-Austragsabschnitt ein Profil mit abschnittsweise abwechselnd geradlinig ansteigenden und geradlinig abfallenden Bereichen aufweisen, wobei vorzugsweise das Längsschnitt-Profil der Arbeitswellen zwischen den geradlinig ansteigenden und den geradlinig abfallenden Bereichen steigungslose Bereiche aufweist.

Der durch die Rotations- und Symmetrieachse der Arbeitswellen verlaufende Längsschnitt der Arbeitswellen an ihrem jeweiligen Endabschnitt förderaufseitig von dem Rohteig-Austragsabschnitt kann auch ein Profil mit wellenartigem Verlauf aufweisen.

Entsprechend kann der durch die Rotations- und Symmetrieachse der Arbeitswellen verlaufende Längsschnitt durch den Gehäuse-Innenraum am Endabschnitt des Gehäuses förderaufseitig von dem Rohteig-Austragsabschnitt ein Profil mit abschnittsweise abwechselnd geradlinig ansteigenden und geradlinig abfallenden Bereichen aufweisen, wobei auch hier vorzugsweise das Längsschnitt-Profil des Gehäuse-Innenraums zwischen den geradlinig ansteigenden und den geradlinig abfallenden Bereichen steigungslose Bereiche aufweist.

Das Längsschnitt-Profil des Gehäuse-Innenraums an seinem Endabschnitt förderaufseitig von dem Rohteig-Austragsabschnitt kann auch ein Profil mit wellenartigem Verlauf aufweisen.

Die steigungslosen Bereiche unterstützen die Teighomogenisierung und tragen vorteilhaft zur Abdichtung des Vakuums in einem auf den Mischkneter folgenden Entgasungsbereich bei.

Die wellenartige Geometrie erzeugt eine besonders intensive peristaltische Teigknetung.

Die mehreren aufeinanderfolgenden Hohlraum-Verengungen können durch mehrere entlang der axialen Richtung aufeinanderfolgende Querschnitts-Erweiterungen der Arbeitswellen gebildet sein, zwischen denen sich jeweils ein nicht-erweiterter axialer Bereich der Arbeitswellen befindet.

Ebenso können die mehreren aufeinanderfolgenden Hohlraum-Verengungen durch mehrere entlang der axialen Richtung aufeinanderfolgende Querschnitts-Verengungen des Gehäuse-Innenraums gebildet sein.

Bei den Arbeitswellen können die oben beschriebenen Querschnitts-Erweiterungen axial derart angeordnet sein, dass sich bei benachbarten Arbeitswellen die Querschnitts-Erweiterungen der einen Arbeitswelle an einem axialen Ort befinden, an dem sich die nicht-erweiterten axialen Bereiche der benachbarten Arbeitswelle befinden. Diese versetzte axiale Anordnung der Querschnitts-Erweiterungen der Arbeitswellen bewirkt, ggf. zusätzlich zu dem Drücken und Dehnen, eine mäandrierende Bewegung des zwangsgeförderten Rohteigs durch den Peristaltik-Knetbereich des Mischkneters, wodurch die Peristaltik-Knetung intensiviert wird.

Der axiale Versatz der Querschnitts-Erweiterungen benachbarter Arbeitswellen kann stufenlos eingestellt werden. Insbesondere bei axial regelmässig bzw. mit einer axialen Periode P periodisch angeordneten Querschnitts-Erweiterungen der Arbeitswellen ist zwischen einem Versatz von 0% (Phasengleichheit bzw. Phasenverschiebung 0) und einem Versatz von 100% (Phasengegenläufigkeit bzw. Phasenverschiebung P/2) eine markante Veränderung der Knetbedingungen in dem Peristaltik-Knetbereich möglich.

Vorzugsweise nimmt der axiale Abstand aufeinanderfolgender Hohlraum-Verengungen entlang der axialen Richtung nach und nach zu. Dadurch steht dem zwangsgeförderten Rohteig entlang der Förderrichtung in den axialen Bereichen zwischen den Hohlraum-Verengungen immer mehr Raum zur Verfügung, wodurch einer Kompression von Gasen im Mischkneter-Hohlraum, die zu einer Verringerung der Dichtwirkung des Rohteiges in den Verengungen führen könnte, entgegengewirkt wird.

Zweckmässigerweise besitzt der erfindungsgemässe Mischkneter förderaufseitig von seinem Bereich zur peristaltischen Teigknetung einen Bereich zur Teigmischung und Teigförderung, in welchem an den Arbeitswellen entlang der Förderrichtung aufeinanderfolgend axiale Bereiche mit Förderschnecken und axiale Bereiche mit Mischblöcken angeordnet sind. Dadurch wird die für die Peristaltik-Knetung des Rohteiges notwendige Zwangsförderung sowie eine Vorab-Mischung des Rohteiges gewährleistet. Im Bereich der Förderschnecken findet vorwiegend ein rollendes Kneten statt, da der Rohteig an der Oberfläche der vorzugsweise aus rostfreiem Stahl bestehenden Förderschnecken haftet und sich kräuselt.

Zweckmässigerweise sind diese Förderschnecken-Bereiche und Mischblock-Bereiche an den Arbeitswellen abwechselnd aufeinanderfolgend angeordnet, wobei es besonders vorteilhaft ist, wenn der axiale Abstand aufeinanderfolgender Mischblock-Bereiche bzw. die axiale Länge des dazwischenliegenden jeweiligen Förderschnecken-Bereichs entlang der Förderrichtung zunimmt.

Bei einer vorteilhaften praktischen Ausführung besitzt dieser Bereich zur Teigmischung und Teigförderung zwei bis vier Förderschnecken-Bereiche und zwei bis vier Mischblock-Bereiche.

Bei einer besonders vorteilhaften Ausführung besitzt der Mischkneter förderaufseitig von seinem Bereich zur peristaltischen Teigknetung einen Bereich zum Walken bzw.

Wirken des Teiges, in welchem an den Arbeitswellen entlang der Förderrichtung Walk- und Wirkschnecken angeordnet sind, die in ihren Schneckenstegen sich in axialer Richtung erstreckende Durchlässe haben, über die benachbarte Windungen eines Schneckenganges miteinander in Fluidverbindung stehen.

Der zwangsgeförderte Rohteig wird hier einerseits entlang der Schneckengänge und andererseits entlang der Durchlässe in den Schneckenstegen von einem Schneckengang in den nächsten Schneckengang transportiert. Der Rohteig wird also zerteilt und wieder vereint. Dieses Walken bzw. Wirken des Rohteiges wirkt sich ebenfalls äusserst positiv auf die Verteilung der Teigkomponenten Stärke und Kleber aus. Die Ausbildung des Klebergerüstes und somit auch die weiter oben genannten Aspekte der Teigwarenqualität werden dadurch verbessert. Diese Walken bzw. Wirken stellt eine Nachahmung der "Finger-Knetung" dar, bei der beim Schliessen der Hand (Faustbildung) der Teig zunächst zerteilt wird. Wenn dann das zerteilte Teiggebilde erneut in die Hand genommen wird und die Hand erneut geschlossen wird, erfolgt zunächst eine Vereinigung und dann wieder ein Zerteilung des Teiges.

Auch hier werden je nach Bedarf unterschiedliche Anordnungen der axialen Durchlässe in den Schneckenstegen gewählt.

Die Durchlässe können einerseits schartenartig am Kamm der Schneckenstege angeordnet sein, oder sie können fensterartig zwischen dem Kern und dem Kamm der Schneckenstege angeordnet sein. Für ein besonders intensives Walken bzw. Wirken können die Durchlässe sowohl schartenartig als auch fensterartig angeordnet sein.

Ähnlich wie bei den aufeinanderfolgenden Hohlräumen in dem Peristaltik-Knetbereich des Mischkneters können die Durchlässe in den Schneckenstegen entlang der Umfangsrichtung der Schneckenstege gleichmässig beabstandet angeordnet sein, oder die Durchlässe sind in den Schneckenstegen entlang der Umfangsrichtung der Schneckenstege entlang der Förderichtung zunehmend beabstandet angeordnet.

In einer praktischen Ausführung wird bevorzugt, mindestens einen Durchlass, vorzugsweise zwei bis sechs Durchlässe, pro Schneckengang-Windung an den Schneckenstegen anzuordnen.

Der erfindungsgemässe Mischkneter kann mehrere, insbesondere zwei, gleichlaufende Arbeitswellen aufweisen. Er wirkt dann als Pumpe mit schlechtem Wirkungsgrad, wobei ein Grossteil der insgesamt bereitgestellten mechanischen Energie in den Rohteig eingetragen wird und zur Ausbildung des Klebergerüsts beiträgt.

Wenn weniger mechanischer Energieeintrag und dafür mehr Pumpwirkung angestrebt wird, bevorzugt man einen Mischkneter, bei dem mehrere, insbesondere zwei, Arbeitswellen vorhanden sind, von denen jeweils benachbarte Arbeitswellen gegenläufig sind.

Vorzugsweise ist bei dem erfindungsgemässen Mischkneter in seinem Bereich zur peristaltischen Teigknetung die Oberfläche der Arbeitswellen und/oder die der Innenwand des Gehäuses mit einer Antihaftschicht, vorzugsweise aus Teflon, überzogen. Dadurch wird erreicht, dass der Rohteig an den Oberflächen in diesem Bereich gleitet und nicht haftet, wodurch eine rollende Teigknetung verhindert und die in diesem Bereich gewollte peristaltische Teigknetung unterstützt wird.

Um den notwendigen Pressdruck für das Pressen des Teiges durch eine Teigwarendüse aufzubauen, ist dem Mischkneter eine Einheit nachgeschaltet, die dies bewerkstelligt.

Hierfür ist der Mischkneter über seinen Rohteig-Austragsabschnitt mit dem Rohteig-Zufuhrabschnitt einer Zahnradpumpe, eines Walzenpaares oder einer Einwellen-Schneckenpresse verbunden.

Diese Aggregate eignen sich besonders gut für den Druckaufbau in dem viskoelastischen Teig.

Wenn der Mischkneter über seinen Rohteig-Austragsabschnitt mit dem Rohteig-Zufuhrabschnitt einer Einwellen-Schneckenpresse verbunden ist, ist diese vorzugsweise ebenfalls mit einem Bereich zur peristaltischen Teigknetung ausgestattet.

Die Einwellen-Schneckenpresse besitzt vorzugsweise ein Gehäuse, einen Rohteig-Zufuhrabschnitt, einen Teig-Austragsabschnitt sowie eine sich von dem Rohteig-Zufuhrabschnitt zu dem Teig-Austragsabschnitt innerhalb des Gehäuses in einer Förderrichtung bzw. axialen Richtung erstreckende Arbeitswelle, an der zwangsfördernde Elemente angeordnet sind.

Erfindungsgemäss besitzt dann der Hohlraum der Einwellen-Schneckenpresse förderaufseitig von ihrem Teig-Austragsabschnitt einen Bereich zur peristaltischen Teigknetung.

Der Peristaltik-Knetbereich der Einwellen-Schneckenpresse kann analog zu dem Peristaltik-Knetbereich des Mischkneters ausgebildet sein.

Vorzugsweise ist zwischen dem Rohteig-Austragsabschnitt des Mischkneters und dem Rohteig-Zufuhrabschnitt ein Entgasungsbereich mit Vakuumanschluss angeordnet.

Zweckmässigerweise schliesst sich an die Einwellen-Schneckenpresse bzw. an die Zahnradpumpe bzw. an das Walzenpaar eine Formgebungseinheit zur Formung des austretenden Teiges an.

Bei einer besonders vorteilhaften Ausführung besitzt die Formgebungseinheit eine Heizeinheit zum kurzzeitigen Aufheizen des durch sie hindurchtretenden Teiges.

Dadurch wird auch die Verarbeitung klebereiweissfreier Rohmaterialien ermöglicht, bei denen sich in dem Mischkneter kein Proteingerüst ausbilden kann. Stattdessen wird durch die Heizeinheit in der Formgebungseinheit eine zumindest partielle Gelatinierung der Stärke erreicht. Durch den gelatinierten Anteil der in den Rohmaterialien enthaltenen Stärke wird dann ebenfalls ein Zusammenkleben der Stärkekörner ähnlich wie bei dem hier nicht vorhandenen Proteingerüst erreicht.

Vorzugsweise ist der Heizeinheit eine Kühleinheit zum sofortigen Abkühlen des in der Heizeinheit aufgeheizten Teiges in der Teigförderrichtung nachgeschaltet. Dadurch kann der sich durch die Düse bewegende Teig sofort nach dem Erhitzen wieder abgekühlt werden, wodurch sich die Gelatinierung der Stärke auf die Oberfläche des sich formenden Teiggebildes (Teigstrang, Teigband, etc.) begrenzen lässt.

Als besonders vorteilhaft erweist sich hierfür, wenn die Heizeinheit förderaufseitig und förderabseitig thermisch isoliert ist.

Das erfindungsgemässe Verfahren zur Herstellung von Teig, insbesondere Teigwarenteig aus stärke- und klebereiweisshaltigen Rohmaterialien, wie Mehl, Griess oder Dunst, unter Verwendung eines erfindungsgemässen Mischkneters weist die folgenden Schritte auf:
a) Erstellen einer Rohmaterial-Trockenmischung;
b) Eindosieren der Rohmaterial-Trockenmischung in den Rohmaterial-Zufuhrabschnitt des Mischkneters;
c) Eindosieren von Wasser in den Mischkneter;
d) Benetzen der Rohmaterial-Trockenmischung innerhalb eines Benetzungsabschnitts des Mischkneters mit Wasser mit oder ohne Dämpfen;
e) Mischen der benetzten und ggfs. gedämpften Rohmaterial-Mischung innerhalb eines Mischungsabschnitts des Mischkneters zu einem Rohteig;
f) peristaltisches Kneten des Rohteiges in einem Peristaltik-Mischbereich des Mischkneters;
g) Entgasen des Rohteiges in einem Entgasungsbereich des Mischkneters;
h) Komprimieren des Rohteiges und Aufbauen von Druck im Innern des Rohteiges; und
i) Formen des so gewonnenen Teiges.

Vorzugsweise erfolgt vor dem Schritt des peristaltischen Knetens (Schritt f) ein Schritt zum Walken bzw. Wirken des Rohteiges innerhalb eines Walk- bzw. Wirkabschnitts des Mischkneters.

Die Temperatur der Rohmaterial-Mischung, des Rohteiges bzw. des Teiges wird während des Verfahrens stets unter 50°C gehalten, wobei vorzugsweise sichergestellt wird, dass die maximale Temperatur während des Verfahrens kleiner als 40°C, vorzugsweise kleiner als 38°C° ist, um die Gefahr einer Denaturierung bzw. Koagulierung des Klebereiweisses auszuschliessen.

Bei einer vorteilhaften Ausführung des erfindungsgemässen Verfahrens ist der spezifische mechanische Energieeintrag im Mischkneter (Leistung des Mischkneters / Nassteig-Massendurchsatz) kleiner als 25 kJ/kg, vorzugsweise kleiner als 20 kJ/kg und am bevorzugtesten kleiner als 15 kJ/kg.

Dies ist deutlich niedriger als bei den herkömmlichen Verfahren zur Herstellung eines vergleichbaren Rohteigs. Dadurch lassen sich die Betriebskosten aufgrund des geringeren Energiebedarfs und wegen des geringeren Verschleisses an dem Mischkneter beachtlich senken.

Durch ein während der Schritte des Benetzens (Schritt d) und/oder des Mischens (Schritt e) durchgeführtes zusätzliches Dämpfen der Rohmaterialien kann bei Bedarf eine gezielte Gelatinierung der Stärke in den Rohmaterialien bewirkt werden. Dieser gelatinierte Stärkeanteil wird dann in den folgenden Schritten des peristaltischen Knetens und ggfs. des Walkens bzw. Wirkens des Rohteiges weiterverarbeitet und trägt ähnlich wie das Klebergerüst zur Verbesserung der am Ende des erfindungsgemässen Verfahrens erzielten Teigwarenqualität bei.

Das Entgasen des Rohteiges (Schritt h) erfolgt bei einem Druck von weniger als 200 mbar. Zweckmässigerweise arbeitet man bei einem Druck von weniger als 150 mbar, vorzugsweise von weniger als 100 mbar. Bei derart niedrigen Drücken kann besonders wirkungsvoll entgast werden.

Das erfindungsgemässe Verfahren lässt sich in abgewandelter Form auch zur Herstellung von Teig, insbesondere Teigwarenteig, aus stärkehaltigen, klebereiweissfreien Rohmaterialien, wie Mehl, Griess oder Dunst, unter Verwendung eines erfindungsgemässen Mischkneters einsetzen.

Dabei erfolgt zwischen dem Schritt des Komprimierens des Rohteiges und dem Aufbauen von Druck im Innern des Rohteiges (Schritt i) und dem Schritt des Formens des so gewonnenen Teiges (Schritt j) ein Schritt zum kurzzeitigen Erhitzen des Teiges auf eine Temperatur oberhalb seiner Gelatinierungstemperatur, insbesondere auf eine Temperatur im Bereich von 68°C bis 75°C.

Vorzugsweise erfolgt während des Schrittes des Formens des so gewonnenen Teiges (Schritt j) ein Schritt zum kurzzeitigen Erhitzen des Teiges auf eine Temperatur oberhalb seiner Gelatinierungstemperatur, insbesondere auf eine Temperatur im Bereich von 68°C bis 75°C.

Besonders vorteilhaft ist es, wenn während des kurzzeitigen Erhitzens des Teiges der geformte Teig, insbesondere die geformte Langware oder die geformte Kurzware, nur an seiner Oberfläche auf eine Temperatur oberhalb der Gelatinierungstemperatur, insbesondere auf eine Temperatur im Bereich von 68°C bis 75°C, erhitzt wird. Dadurch lässt sich die Oberfläche des Teiges durch gelatinisierte Stärke versiegeln, wodurch insbesondere die Kochfestigkeit auch ohne geschlossenem Klebergerüst verbessert wird.

Das Walken bzw. Wirken des Rohteiges (Schritt f) erfolgt vorzugsweise durch Zerteilen und anschliessendes Vereinen der Rohteig-Strömung in dem Walk- und Wirkabschnitt des Mischkneters. Dadurch wird eine "Finger-Knetung" nachgeahmt.

Besonders vorteilhaft ist es, wenn das Walken bzw. Wirken des Rohteiges (Schritt f) durch mehrmalig aufeinanderfolgendes abwechselndes Zerteilen und Vereinen der Rohteig-Strömung in dem Walk- und Wirkabschnitt des Mischkneters erfolgt.

Das peristaltische Kneten des Rohteiges (Schritt g) erfolgt vorzugsweise durch Dehnen und Drücken sowie anschliessendes Entspannen und Rückvermischen der Rohteig-Strömung in dem Peristaltik-Mischbereich des Mischkneters. Dadurch wird eine "Handballen-Knetung" nachgeahmt.

Besonders vorteilhaft ist auch hier, wenn das peristaltische Kneten des Rohteiges (Schritt g) durch mehrmalig aufeinanderfolgendes abwechselndes Dehnen und Drücken sowie anschliessendes Entspannen und Rückvermischen der Rohteig-Strömung in dem Peristaltik-Mischbereich des Mischkneters erfolgt.

Als stärkehaltiges, klebereiweissfreies Rohmaterial kommt mindestens ein Material aus der folgenden Gruppe in Frage:
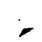 Mais, Reis, Hirse, Gerste, jeweils in Form von Griess, Mehl oder Dunst;
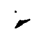 Stärke, insbesondere Mais-, Reis-, Hirse-, Gersten-Stärke, Kartoffelstärke, Tapiokastärke, Palmstärke, Mungbean-Stärke, Bihoon-Stärke, Mihoon-Stärke, etc.

Der erfindungsgemässe Mischkneter, die Einwellen-Schneckenpresse, der dazwischen angeordnete Entgasungsbereich und die Formgebungseinheit bilden eine Anlage zur Herstellung von (Frisch-)Teigwaren.

Diese Teigwaren können dann durch anschliessendes Trocknen mittels eines Teigwarentrockners oder auch durch anschliessendes Abkühlen oder Einfrieren mittels eines Teigwarenkühlers bzw. Teigwarengefrierers haltbar gemacht werden.

Weitere Vorteile, Merkmale und Anwendungsmöglichkeiten der Erfindung ergeben sich aus der nun folgenden nicht einschränkend aufzufassenden Beschreibung anhand der Zeichnung, wobei:
- Fig. 1: eine schematische Draufsicht auf einen Abschnitt eines erfindungsgemässen Mischkneters mit aufgeschnittenem Gehäuse ist;
- Fig. 2: eine schematische Seitenansicht einer ersten Variante eines Abschnitts einer dem erfindungsgemässen Mischkneter zugeordneten Einwellen-Schneckenpresse ist;
- Fig. 3: eine schematische Seitenansicht einer zweiten Variante eines Abschnitts einer dem erfindungsgemässen Mischkneter zugeordneten Einwellen-Schneckenpresse ist;
- Fig. 4: eine Mikro-Aufnahme eines herkömmlichen Teigwarenproduktes zeigt; und
- Fig. 5: eine Mikro-Aufnahme eines erfindungsgemäss hergestellten Teigwarenproduktes zeigt.

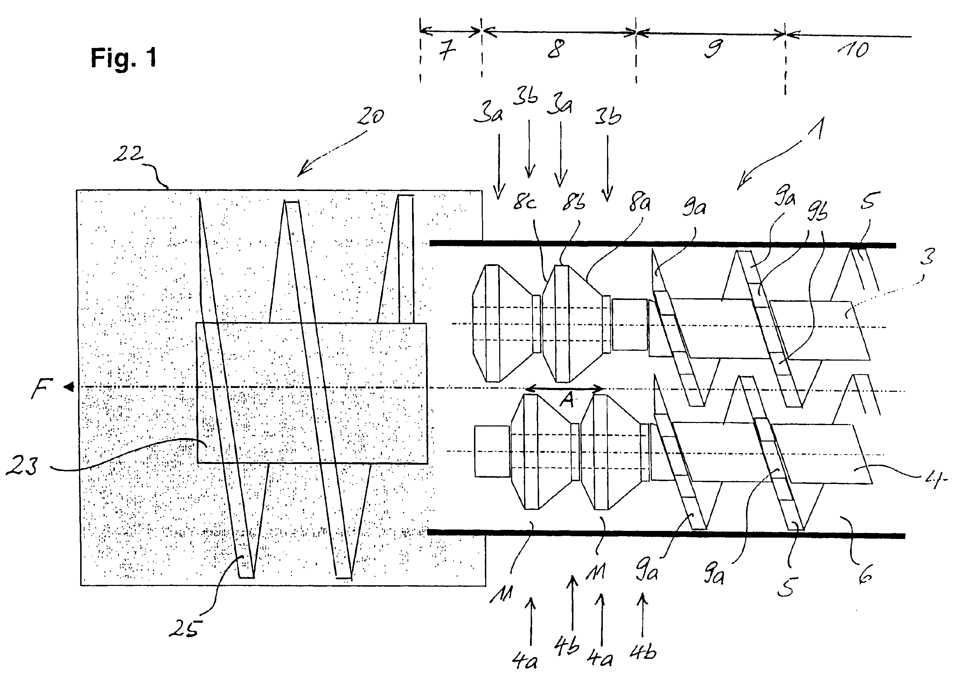

Fig. 1 ist eine schematische Draufsicht auf einen Abschnitt eines erfindungsgemässen Mischkneters 1 mit aufgeschnittenem Gehäuse 2. Innerhalb des Gehäuses 2 erstrecken sich in dem Hohlraum 6 zwei parallel zueinander angeordnete Arbeitswellen 3, 4, die eine Förderrichtung F für Rohteig in dem Mischkneter 1 bestimmen. An den Mischkneter 1 schliesst sich förderabseitig eine Einwellen-Schneckenpresse 20 an. Von dem Mischkneter 1 ist nur der förderabseitige Endbereich dargestellt, während für die Einwellen-Schneckenpresse 20 nur der förderaufseitige Endbereich dargestellt ist.

Auf den Arbeitswellen 3, 4 des Mischkneters 1 sind zwangsfördernde Elemente in Form von Förderschnecken 5 angebracht, die sich in einem axialen Bereich 10 zur Teigmischung und Teigförderung befinden. Förderabseitig davon schliesst sich ein Bereich 9 zum Walken bzw. Wirken des Teiges an, in dem Walk- und Wirkschnecken 9a auf den Arbeitswellen 3, 4 angebracht sind. Diese Walk- und Wirkschnecken 9a besitzen in ihren Schneckenstegen Durchlässe 9b, die eine axiale Fluidverbindung zwischen zwei benachbarten Windungen des Schneckenganges der Walk- und Wirkschnecken 9a bilden. Weiter förderabseitig schliesst sich an den Bereich 9 zum Walken bzw. Wirken ein Bereich 8 zur peristaltischen Teigknetung an. In diesem Bereich sind an den Arbeitswellen 3, 4 jeweils zwei axial aufeinanderfolgende und um einen axialen Abstand A voneinander beabstandete Querschnittserweiterungen 3a, 4a ("Knetpilze") angeordnet, vor denen sich jeweils in axialer Richtung ein nicht-erweiterter axialer Bereich 3b, 4b der Arbeitswelle 3, 4 befindet. Dadurch werden in dem Gehäuse 2 aufeinanderfolgend zwei Hohlraum-Verengungen 11 gebildet. Genauer betrachtet setzt sich jede dieser Hohlraum-Verengungen 11 aus einem sich verengenden axialen Hohlraum-Bereich 8a, einem axialen Engpass-Bereich 8b und einem sich aufweitenden axialen Hohlraum-Bereich 8c zusammen.

Der Rohteig-Austragsabschnitt 7 mit den jeweils zwei Knetpilzen 3a, 4a an den Arbeitswellen 3, 4 am förderabseitigen Ende des Mischkneters 1 mündet in die Einwellen-Schneckenpresse 20, in deren Gehäuse 22 sich eine einzige Arbeitswelle 23 mit zwangsfördernden Elementen 25 in Form von Förderschnecken entlang der Förderrichtung F erstreckt.

Wenn nun in einem am förderaufseitigen Ende des Mischkneters 1 angeordneten Rohmaterial-Zufuhrabschnitt (nicht gezeigt) Rohmaterial, wie z.B. Mehl, Griess und Wasser, in den Mischkneter 1 eingebracht wird, erfolgt in dem Bereich 10 eine Teigmischung und Teigförderung mittels der Förderschnecken 5 und mittels (nicht gezeigter) Mischblöcke. Innerhalb des Bereichs 10 wechseln sich in axialer Richtung Förderschnecken 5 mit Mischblöcken ab. Dadurch wird die Zwangsförderung und die Mischung des Rohmaterial-Gemisches zu einem Rohteig gewährleistet.

In dem sich axial anschliessenden Bereich 9 erfolgt ein Walken bzw. Wirken des Rohteiges mittels der Walk- und Wirkschnecken 9a. Zumindest ein Teil des in dem Schneckengang der Walk- und Wirkschnecken 9a transportierten Rohteigs tritt durch die Durchlässe 9b in den Walk- und Wirkschnecken hindurch und gelangt über diesen "Kurzschluss" von der einen zur nächsten Windung des Schneckengangs. Dadurch wird der Rohteig in mehrere Teilströme durch die Durchlässe 9b zerteilt und anschliessend im Schneckengang wieder vereinigt. Dieses abwechselnde Zerteilen und Vereinigen des Rohteigs erfolgt mehrmals aufeinander und stellt eine Nachahmung der "Finger-Knetung" dar.

In dem weiteren sich axial anschliessenden Bereich 8 erfolgt ein peristaltisches Kneten des Rohteigs zwischen den durch die Querschnitts-Erweiterungen 3a, 4a gebildeten Knetpilzen der Arbeitswellen 3, 4 und der Innenwand des Gehäuses 2. Aufgrund der durch die Förderschnecken 5 im Bereich 10 vermittelten Zwangsförderung wird der Rohteig durch den Bereich 8 gepresst, wobei er die zwei aufeinanderfolgenden Hohlraum-Verengungen 11 passieren muss, die durch die Knetpilze 3a, 4a gebildet werden.

Dadurch wird er in den sich verengenden axialen Hohlraum-Bereichen 8a gedehnt und gedrückt und in den sich aufweitenden axialen Hohlraum-Bereichen 8c entspannt und rückvermischt. Dieses abwechselnde Dehnen und Drücken sowie Entspannen und Rückvermischen des Rohteigs erfolgt mehrmals aufeinander und stellt eine Nachahmung der "Handballen-Knetung" dar.

Sowohl durch das Walken bzw. Wirken im Bereich 9 als auch durch das peristaltische Kneten im Bereich 8 wird die Ausbildung des Proteingerüstes in dem Rohteig günstig beeinflusst.

Ein weiterer Vorteil des Bereichs 8 für die peristaltische Knetung besteht darin, dass der durch die Hohlraum-Verengungen 11 hindurchgepresste Rohteig vor allem in den axialen Engpass-Bereichen 8b als Dichtung wirkt, die zur Aufrechterhaltung eines Vakuums in einem (nicht gezeigten) Entgasungsbereich zwischen dem Mischkneter 1 und der Einwellen-Schneckenpresse 20 beiträgt.

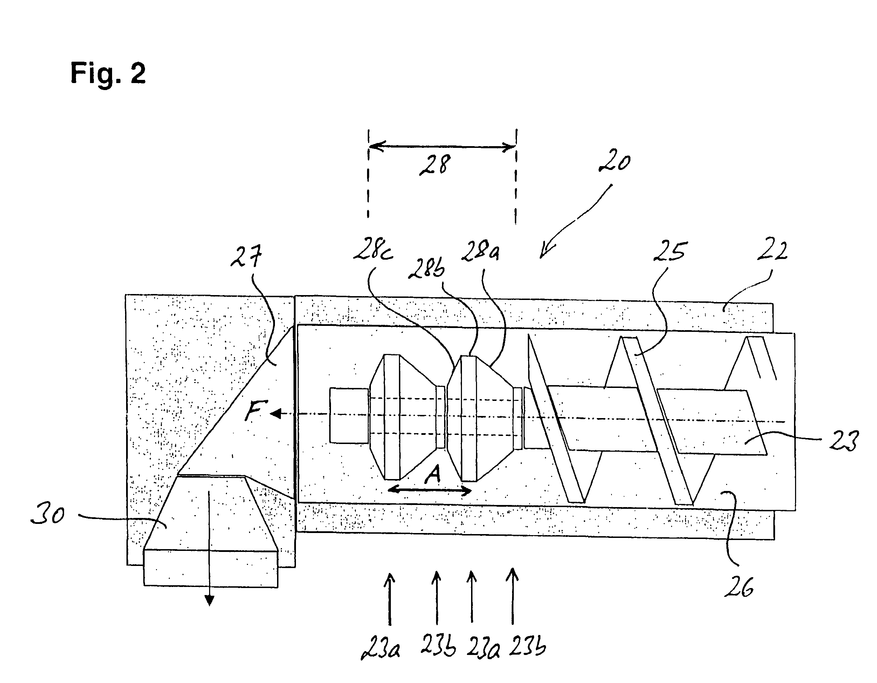

Fig. 2 ist eine schematische Seitenansicht einer ersten Variante eines Abschnitts einer dem erfindungsgemässen Mischkneter 1 zugeordneten Einwellen-Schneckenpresse 20. In dem Hohlraum 26 des Gehäuses 22 der Einwellen-Schneckenpresse 20 erstreckt sich in entlang der Förderrichtung F eine einzige Arbeitswelle 23, an der zwangsfördernde Elemente in Form von Förderschnecken 25 angebracht sind. Weiter förderabseitig schliesst sich an den Bereich mit den Förderschnecken 25 ein Bereich 28 zur peristaltischen Teigknetung an. In diesem Bereich sind an der Arbeitswellen 23 zwei axial aufeinanderfolgende und um einen axialen Abstand A voneinander beabstandete Querschnittserweiterungen 23a ("Knetpilze") angeordnet, vor denen sich jeweils in axialer Richtung ein nicht-erweiterter axialer Bereich 23b der Arbeitswelle 23 befindet. Dadurch werden in dem Gehäuse 22 aufeinanderfolgend zwei Hohlraum-Verengungen 21 gebildet. Genauer betrachtet setzt sich jede dieser Hohlraum-Verengungen 21 aus einem sich verengenden axialen Hohlraum-Bereich 28a, einem axialen Engpass-Bereich 28b und einem sich aufweitenden axialen Hohlraum-Bereich 28c zusammen.

Ähnlich wie in dem Mischkneter 1 (siehe Fig. 1) erfolgt in dem Bereich 28 ein peristaltisches Kneten des Teigs zwischen den durch die Querschnitts-Erweiterungen 23a gebildeten Knetpilzen der Arbeitswelle 23 und der Innenwand des Gehäuses 22. Aufgrund der durch die Förderschnecken 25 vermittelten Zwangsförderung wird der Teig durch den Bereich 28 gepresst, wobei er die zwei aufeinanderfolgenden Hohlraum-Verengungen 21 passieren muss, die durch die Knetpilze 23a gebildet werden. Dadurch wird der Teig in den sich verengenden axialen Hohlraum-Bereichen 28a gedehnt und gedrückt und in den sich aufweitenden axialen Hohlraum-Bereichen 28c entspannt und rückvermischt. Dieses abwechselnde Dehnen und Drücken sowie Entspannen und Rückvermischen des Teigs erfolgt auch hier mehrmals aufeinander und stellt eine Nachahmung der "Handballen-Knetung" dar.

An die Einwellen-Schneckenpresse 20 schliesst sich förderabseitig eine Formgebungseinheit in Form einer Teigwarendüse 30 an, durch die der fertige Teig zur Formgebung hindurchgepresst wird.

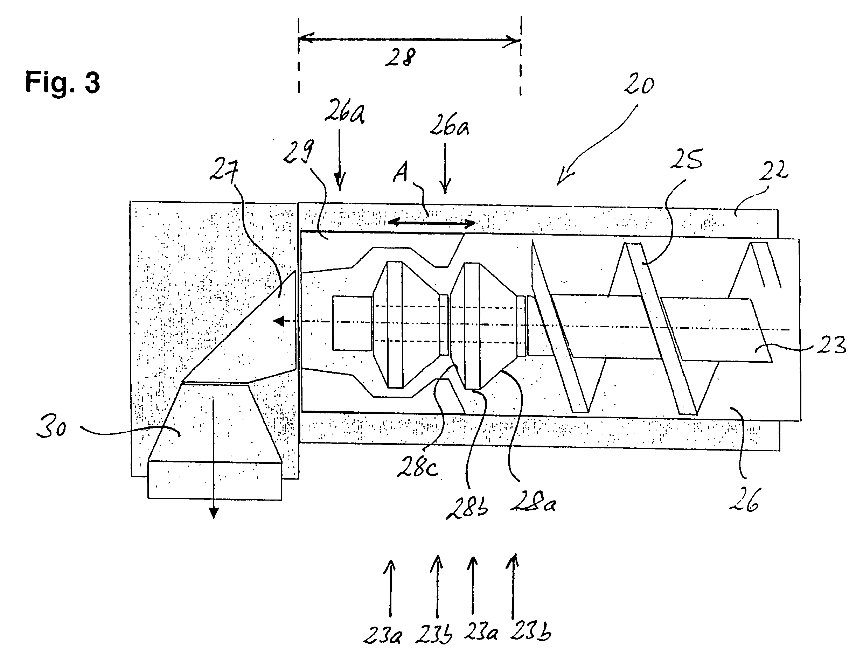

Fig. 3 ist eine schematische Seitenansicht einer zweiten Variante eines Abschnitts einer dem erfindungsgemässen Mischkneter 1 zugeordneten Einwellen-Schneckenpresse 20. Sämtliche Elemente, die denen in Fig. 2 entsprechen, tragen dieselben Bezugszeichen wie in Fig. 2. Die Variante der Fig. 3 unterscheidet sich von der Variante der Fig. 2 dadurch, dass im förderabseitigen Endbereich des Gehäuses 22 ein Einsatz 29 angeordnet ist, durch den Querschnitts-Verengungen 26a des Hohlraums 26 erzeugt werden. Somit tragen sowohl die Querschnitts-Erweiterungen 23a der Arbeitswelle 23 als auch die Querschnitts-Verengungen 26a des Einsatzes 29 zur Bildung des Bereichs 29 zur peristaltischen Teigknetung bei.

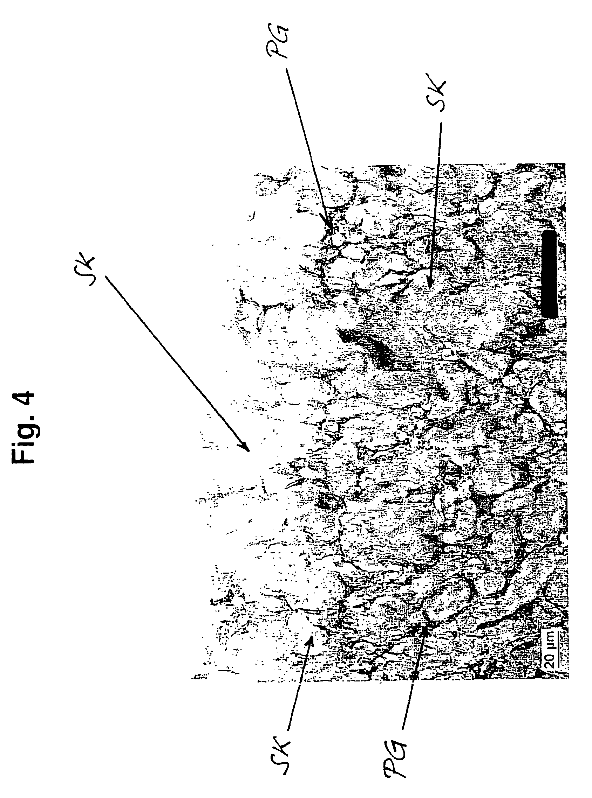

Fig. 4 zeigt eine Mikro-Aufnahme eines herkömmlichen Teigwarenproduktes. Diese Aufnahme wurde durch Durchstrahlen eines ca. 12 µm dicken Schnittes aus einem Teigwarenprodukt erstellt. Durch Einfärben wurden das Proteingerüst PG und die von dem Proteingerüst eingeschlossenen Stärkekörner SK unterschiedlich sichtbar gemacht. Die dunkleren netzartigen Bereiche stellen das Proteingerüst PG dar, während die helleren Bereiche die Stärkekörner SK darstellen. Der obere Rand der abgebildeten Teigstruktur stellt die Oberfläche des Teigwarenproduktes dar. Man erkennt, dass die einzelnen Zellen des Proteingerüsts PG sowohl im Innern des Produktes als auch an seiner Oberfläche nicht geschlossen sind.

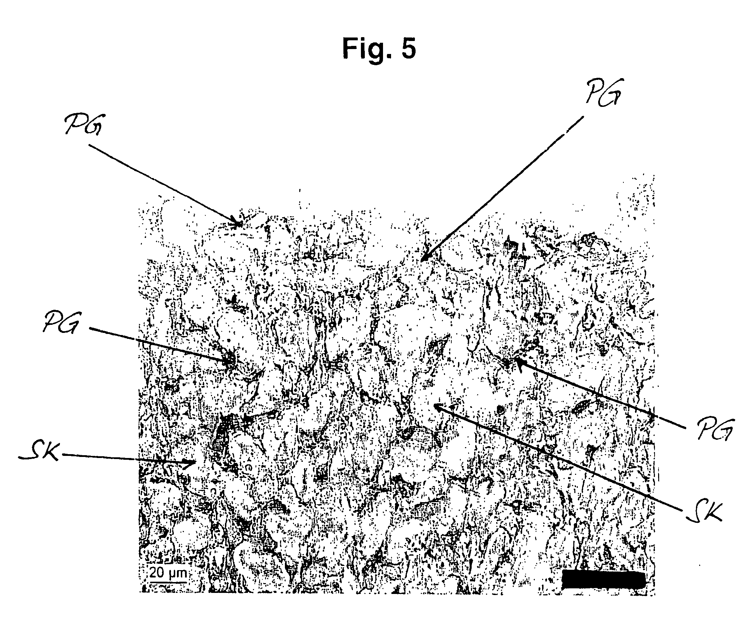

Fig. 5 zeigt eine Mikro-Aufnahme eines erfindungsgemäss hergestellten Teigwarenproduktes. Die Herstellung erfolgte durch Verwendung eines stärke- und klebereiweisshaltigen Rohmaterials in dem erfindungsgemässen Mischkneter mit Walk- und Wirkschnecken sowie teflon-bechichteten Knetpilzen. Der Mischkneter wurde mit einer Leistung von 9,5 kW mit einem Durchsatz von 1600 kg/h betrieben. Dies entspricht einem spezifischen mechanischen Energieeintrag im Mischkneter von knapp 22 kJ/kg. Zwischen dem Mischkneter und der Einwellen-Schneckenpresse wurde mit einem Druck von ca. 100 mbar entgast. Diese Aufnahme wurde auf dieselbe Weise wie die Aufnahme der Fig. 4 präpariert und fotografiert. Die dunkleren netzartigen Bereiche stellen somit wiederum das Proteingerüst PG dar, während die helleren Bereiche die Stärkekörner SK darstellen. Der obere Rand der abgebildeten Teigstruktur stellt wiederum die Oberfläche des Teigwarenproduktes dar. Man erkennt, dass die einzelnen Zellen des Proteingerüsts PG hier sowohl im Innern des Produktes als auch an seiner Oberfläche praktisch vollständig geschlossen sind.

Dieses während des erfindungsgemässen Mischens, Entgasens und Knetens optimal ausgebildete und vor allem an der Teigwarenoberfläche geschlossene Klebergerüst ist für die Teigwarenqualität von herausragender Bedeutung. Das während des Mischens und Knetens relativ feinzellig ausgebildete Klebergerüst (Proteinmatrix) trägt wesentlich zur Elastizität und Bissfestigkeit ("al dente") sowie zur Kochfestigkeit und Unterdrückung der Oberflächenschleimigkeit beim Kochen dieser Teigwaren bei.

### Bezugszeichen

- 1: Mischkneter
- 2: Gehäuse
- 3: Arbeitswelle
- 3a: Querschnitts-Erweiterung der Arbeitswelle
- 3b: nicht-erweiterter axialer Bereich der Arbeitswelle
- 4: Arbeitswelle
- 4a: Querschnitts-Erweiterung der Arbeitswelle
- 4b: nicht-erweiterter axialer Bereich der Arbeitswelle
- 5: zwangsfördernde Elemente / Förderschnecken
- 6: Hohlraum
- 7: Austragsabschnitt
- 8: Bereich zur peristaltischen Teigknetung
- 8a: sich verengender axialer Hohlraum-Bereich
- 8b: axialer Engpass-Bereich
- 8c: sich aufweitender axialer Hohlraum-Bereich
- A: axialer Abstand der Hohlraum-Verengungen
- 9: Bereich zum Walken bzw. Wirken des Teiges
- 9a: Walk- und Wirkschnecken
- 9b: Durchlässe
- 10: Bereich zur Teigmischung und Teigförderung
- 11: Hohlraum-Verengung
- 20: Einwellen-Schneckenpresse
- 21: Hohlraum-Verengung
- 22: Gehäuse
- 23: Arbeitswelle
- 23a: Querschnitts-Erweiterung der Arbeitswelle
- 23b: nicht-erweiterter axialer Bereich der Arbeitswelle
- 25: zwangsfördernde Elemente / Förderschnecken
- 26: Hohlraum
- 26a: Querschnitts-Verengung des Hohlraums
- 27: Austragsabschnitt
- 28: Bereich zur peristaltischen Teigknetung
- 28a: sich verengender axialer Hohlraum-Bereich
- 28b: axialer Engpass-Bereich
- 28c: sich aufweitender axialer Hohlraum-Bereich
- 29: Einsatz
- 30: Formgebungseinheit / Teigwarendüse
- A: axialer Abstand der Hohlraum-Verengungen
- F: Förderrichtung
- PG: Proteingerüst (Proteinmatrix)
- SK: Stärkekorn

## Patentansprüche

1. Mischkneter (1) zur Herstellung von Rohteig, insbesondere aus stärke- und klebereiweisshaltigen Rohstoffen wie Mehl, Griess oder Dunst, mit einem Gehäuse (2), einem Rohmaterial-Zufuhrabschnitt, einem Rohteig-Austragsabschnitt sowie mindestens zwei miteinander zusammenarbeitenden, sich von dem Rohmaterial-Zufuhrabschnitt zu dem Rohteig-Austragsabschnitt innerhalb des Gehäuses in einer Förderrichtung bzw. axialen Richtung erstreckenden Arbeitswellen (3, 4), an denen Misch- und Knetelemente sowie zwangsfördernde Elemente (5) angeordnet sind, **dadurch gekennzeichnet, dass** der Mischkneter-Hohlraum (6) förderaufseitig von seinem Rohteig-Austragsabschnitt (7) einen Bereich (8) zur peristaltischen Teigknetung besitzt, der jeweils mindestens einen sich verengenden axialen Hohlraum-Bereich (8a) aufweist, in welchem die senkrecht zur axialen Richtung gemessene freie Querschnittsfläche des Hohlraums (6) zwischen der Oberfläche der Arbeitswellen (3, 4) und der Innenwand des Gehäuses (2) von einem Bereich mit grosser freier Querschnittsfläche zu einem Bereich mit kleiner freier Querschnittsfläche entlang der axialen Richtung abnimmt.

2. Mischkneter nach Anspruch 1, **dadurch gekennzeichnet, dass** der Mischkneter-Hohlraum (4) in seinem Bereich (8) zur peristaltischen Teigknetung ausserdem jeweils mindestens einen sich aufweitenden axialen Hohlraum-Bereich (8c) aufweist, der sich förderabseitig an den sich verengenden axialen Hohlraum-Bereich (8a) anschliesst und in welchem die senkrecht zur axialen Richtung gemessene freie Querschnittsfläche des Hohlraums (6) zwischen der Oberfläche der Arbeitswellen (3, 4) und der Innenwand des Gehäuses (2) von einem Bereich mit kleiner freier Querschnittsfläche zu einem Bereich mit grosser freier Querschnittsfläche entlang der axialen Richtung zunimmt.

3. Mischkneter nach Anspruch 2, **dadurch gekennzeichnet, dass** der Mischkneter-Hohlraum (6) in seinem Bereich (8) zur peristaltischen Teigknetung zwischen dem sich verengenden axialen Hohlraum-Bereich (8a) und dem sich aufweitenden axialen Hohlraum-Bereich (8c) einen axialen Engpass-Bereich (8b) aufweist, in welchem die senkrecht zur axialen Richtung gemessene freie Querschnittsfläche des Hohlraums zwischen der Oberfläche der Arbeitswellen und der Innenwand des Gehäuses entlang der axialen Richtung einen minimalen Wert hat.

4. Mischkneter nach Anspruch 2, **dadurch gekennzeichnet, dass** der Mischkneter-Hohlraum in seinem Bereich zur peristaltischen Teigknetung mindestens eine, vorzugsweise zwei bis sechs, axial aufeinanderfolgende Hohlraum-Verengungen (11) aufweist, die jeweils aus einem sich verengenden axialen Hohlraum-Bereich (8a) sowie einem sich aufweitenden axialen Hohlraum-Bereich (8c) bestehen und zur peristaltischen Teig-Knetung dienen.

5. Mischkneter nach Anspruch 3, **dadurch gekennzeichnet, dass** der Mischkneter-Hohlraum in seinem Bereich zur peristaltischen Teigknetung mindestens eine, vorzugsweise zwei bis sechs, axial aufeinanderfolgende Hohlraum-Verengungen (11) aufweist, die jeweils aus einem sich verengenden axialen Hohlraum-Bereich (8a), einem axialen Engpass-Bereich (8b) und einem sich aufweitenden axialen Hohlraum-Bereich (83) bestehen und zur peristaltischen Teig-Knetung dienen.

6. Mischkneter nach einem der vorhergehenden Ansprüche, **dadurch gekennzeichnet, dass** die Arbeitswellen (3, 4) an ihrem jeweiligen Endabschnitt förderaufseitig von dem Rohteig-Austragsabschnitt rotationssymmetrisch ausgebildet sind.

7. Mischkneter nach einem der vorhergehenden Ansprüche, **dadurch gekennzeichnet, dass** die den Oberflächen der Arbeitswellen gegenüberliegenden Bereiche der Gehäuse-Innenwand am Endabschnitt des Gehäuses (2) förderaufseitig von dem Rohteig-Austragsabschnitt rotationssymmetrisch ausgebildet sind.

8. Mischkneter nach einem der Ansprüche 4 bis 7, **dadurch gekennzeichnet, dass** die mehreren aufeinanderfolgenden Hohlraum-Verengungen (11) durch mehrere entlang der axialen Richtung aufeinanderfolgende Querschnitts-Erweiterungen (3a, 4a) der Arbeitswellen gebildet sind, zwischen denen sich jeweils ein nicht-erweiterter axialer Bereich der Arbeitswellen (3b, 4b) befindet.

9. Mischkneter nach einem der Ansprüche 4 bis 8, **dadurch gekennzeichnet, dass** die mehreren aufeinanderfolgenden Hohlraum-Verengungen (11) durch mehrere entlang der axialen Richtung aufeinanderfolgende Querschnitts-Verengungen des Gehäuse-Innenraums gebildet sind.

10. Mischkneter nach Anspruch 8 oder 9, **dadurch gekennzeichnet, dass** bei den Arbeitswellen (3, 4) die Querschnitts-Erweiterungen (3a) axial derart angeordnet sind, dass sich bei benachbarten Arbeitswellen (3, 4) die Querschnitts-Erweiterungen (31) einer Arbeitswelle (3) an einem axialen Ort befinden, an dem sich die nicht-erweiterten axialen Bereiche (4b) einer benachbarten Arbeitswelle (4) befinden.

11. Mischkneter nach einem der Ansprüche 8 bis 10, **dadurch gekennzeichnet, dass** der axiale Abstand (A) aufeinanderfolgender Hohlraum-Verengungen (11) entlang der axialen Richtung nach und nach zunimmt.

12. Mischkneter nach einem der vorhergehenden Ansprüche, **dadurch gekennzeichnet, dass** er förderaufseitig von seinem Bereich (8) zur peristaltischen Teigknetung einen Bereich zur Teigmischung und Teigförderung (10) besitzt, in welchem an den Arbeitswellen (3, 4) entlang der Förderrichtung aufeinanderfolgend axiale Bereiche mit Förderschnecken (5) und axiale Bereiche mit Mischblöcken angeordnet sind.

13. Mischkneter nach Anspruch 12, **dadurch gekennzeichnet, dass** die Förderschnecken-Bereiche und die Mischblock-Bereiche an den Arbeitswellen abwechselnd aufeinanderfolgen.

14. Mischkneter nach Anspruch 13, **dadurch gekennzeichnet, dass** der axiale Abstand aufeinanderfolgender Mischblock-Bereiche bzw. die axiale Länge des dazwischenliegenden jeweiligen Förderschnecken-Bereichs entlang der Förderrichtung zunimmt.

15. Mischkneter nach einem der Ansprüche 12 bis 14, **dadurch gekennzeichnet, dass** der Bereich zur Teigmischung und Teigförderung zwei bis vier Förderschnecken-Bereiche und zwei bis vier Mischblock-Bereiche aufweist.

16. Mischkneter nach einem der vorhergehenden Ansprüche, **dadurch gekennzeichnet, dass** er förderaufseitig von seinem Bereich zur peristaltischen Teigknetung einen Bereich (9) zum Walken bzw. Wirken des Teiges besitzt, in welchem an den Arbeitswellen (3, 4) entlang der Förderrichtung Walk- und Wirkschnecken (9a) angeordnet sind, die in ihren Schneckenstegen sich in axialer Richtung erstreckende Durchlässe (9b) haben, über die benachbarte Windungen eines Schneckenganges miteinander in Fluidverbindung stehen.

17. Mischkneter nach Anspruch 16, **dadurch gekennzeichnet, dass** Durchlässe schartenartig am Kamm der Schneckenstege angeordnet sind.

18. Mischkneter nach Anspruch 16 oder 17, **dadurch gekennzeichnet, dass** Durchlässe fensterartig zwischen dem Kern und dem Kamm der Schneckenstege angeordnet sind.

19. Mischkneter nach einem der vorhergehenden Ansprüche, **dadurch gekennzeichnet**, das er mehrere, insbesondere zwei, gleichlaufende Arbeitswellen (3, 4) aufweist.

20. Mischkneter nach einem der Ansprüche 1 bis 19, **dadurch gekennzeichnet**, das er mehrere, insbesondere zwei, Arbeitswellen aufweist, von denen jeweils benachbarte Arbeitswellen gegenläufig sind.

21. Mischkneter nach einem der vorhergehenden Ansprüche, **dadurch gekennzeichnet, dass** in seinem Bereich (8) zur peristaltischen Teigknetung die Oberfläche der Arbeitswellen und/oder die der Innenwand des Gehäuses mit einer Antihaftschicht, vorzugsweise aus Teflon, überzogen ist.

22. Mischkneter nach einem der vorhergehenden Ansprüche, **dadurch gekennzeichnet, dass** er über seinen Rohteig-Austragsabschnitt mit dem Rohteig-Zufuhrabschnitt einer Zahnradpumpe verbunden ist.

23. Mischkneter nach einem der vorhergehenden Ansprüche, **dadurch gekennzeichnet, dass** er über seinen Rohteig-Austragsabschnitt mit dem Rohteig-Zufuhrabschnitt eines Walzenpaares verbunden ist.

24. Mischkneter nach einem der vorhergehenden Ansprüche, **dadurch gekennzeichnet, dass** er über seinen Rohteig-Austragsabschnitt mit dem Rohteig-Zufuhrabschnitt einer Einwellen-Schneckenpresse (20) verbunden ist.

25. Mischkneter nach Anspruch 24, wobei die Einwellen-Schneckenpresse (20) ein Gehäuse (22), einen Rohteig-Zufuhrabschnitt, einen Teig-Austragsabschnitt sowie eine sich von dem Rohteig-Zufuhrabschnitt zu dem Teig-Austragsabschnitt innerhalb des Gehäuses in einer Förderrichtung bzw. axialen Richtung erstreckenden Arbeitswelle (23), an der zwangsfördernde Elemente (25) angeordnet sind, **dadurch gekennzeichnet, dass** der Hohlraum (26) der Einwellen-Schneckenpresse (20) förderaufseitig von ihrem Teig-Austragsabschnitt einen Bereich (28) zur peristaltischen Teigknetung besitzt, der jeweils mindestens einen sich verengenden axialen Hohlraum-Bereich (28a) aufweist, in welchem die senkrecht zur axialen Richtung gemessene freie Querschnittsfläche des Hohlraums (26) zwischen der Oberfläche der Arbeitswelle (23) und der Innenwand des Gehäuses (22) von einem Bereich mit grosser freier Querschnittsfläche zu einem Bereich mit kleiner freier Querschnittsfläche entlang der axialen Richtung abnimmt.

26. Mischkneter nach Anspruch 25, **dadurch gekennzeichnet, dass** der Hohlraum (26) der Einwellen-Schneckenpresse (20) in ihrem Bereich (28) zur peristaltischen Teigknetung ausserdem jeweils mindestens einen sich aufweitenden axialen Hohlraum-Bereich (28c) aufweist, der sich förderabseitig an den sich verengenden axialen Hohlraum-Bereich (28a) anschliesst und in welchem die senkrecht zur axialen Richtung gemessene freie Querschnittsfläche des Hohlraums (26) zwischen der Oberfläche der Arbeitswelle (23) und der Innenwand des Gehäuses (22) von einem Bereich mit kleiner freier Querschnittsfläche zu einem Bereich mit grosser freier Querschnittsfläche entlang der axialen Richtung zunimmt.

27. Mischkneter nach Anspruch 26, **dadurch gekennzeichnet, dass** der Hohlraum der Einwellen-Schneckenpresse (20) in ihrem Bereich (28) zur peristaltischen Teigknetung zwischen dem sich verengenden axialen Hohlraum-Bereich (28a) und dem sich aufweitenden axialen Hohlraum-Bereich (28c) einen axialen Engpass-Bereich (28b) aufweist, in welchem die senkrecht zur axialen Richtung gemessene freie Querschnittsfläche des Hohlraums (26) zwischen der Oberfläche der Arbeitswelle (23) und der Innenwand des Gehäuses (22) entlang der axialen Richtung einen minimalen Wert hat.

28. Mischkneter nach Anspruch 26, **dadurch gekennzeichnet, dass** der Hohlraum der Einwellen-Schneckenpresse (20) in ihrem Bereich (28) zur peristaltischen Teigknetung mindestens eine, vorzugsweise zwei bis sechs, axial aufeinanderfolgende Hohlraum-Verengungen aufweist, die jeweils aus einem sich verengenden axialen Hohlraum-Bereich (28a) sowie einem sich aufweitenden axialen Hohlraum-Bereich (28c) bestehen und zur peristaltischen Teig-Knetung dienen.

29. Mischkneter nach Anspruch 27, **dadurch gekennzeichnet, dass** der Hohlraum der Einwellen-Schneckenpresse (20) in ihrem Bereich zur peristaltischen Teigknetung mindestens eine, vorzugsweise zwei bis sechs, axial aufeinanderfolgende Hohlraum-Verengungen (21) aufweist, die jeweils aus einem sich verengenden axialen Hohlraum-Bereich (28a), einem axialen Engpass-Bereich (28b) und einem sich aufweitenden axialen Hohlraum-Bereich (28c) bestehen und zur peristaltischen Teig-Knetung dienen.

30. Mischkneter nach einem der Ansprüche 25 bis 29, **dadurch gekennzeichnet, dass** die Arbeitswelle 23 der Einwellen-Schneckenpresse 20 an ihrem Endabschnitt förderaufseitig von dem Teig-Austragsabschnitt rotationssymmetrisch ausgebildet ist.

31. Mischkneter nach einem der Ansprüche 25 bis 30, **dadurch gekennzeichnet, dass** der Bereich der Gehäuse-Innenwand der Einwellen-Schneckenpresse (20) am Endabschnitt des Gehäuses (22) förderaufseitig von dem Teig-Austragsabschnitt rotationssymmetrisch ausgebildet ist.

32. Mischkneter nach einem der Ansprüche 28 bis 31, **dadurch gekennzeichnet, dass** die mehreren aufeinanderfolgenden Hohlraum-Verengungen (21) der Einwellen-Schneckenpresse (20) durch mehrere entlang der axialen Richtung aufeinanderfolgende Querschnitts-Erweiterungen (23a, 23b) der Arbeitswelle gebildet sind, zwischen denen sich jeweils ein nicht-erweiterter axialer Bereich der Arbeitswelle befindet.

33. Mischkneter nach einem der Ansprüche 28 bis 32, **dadurch gekennzeichnet, dass** die mehreren aufeinanderfolgenden Hohlraum-Verengungen der Einwellen-Schneckenpresse (20) durch mehrere entlang der axialen Richtung aufeinanderfolgende Querschnitts-Verengungen des Gehäuse-Innenraums gebildet sind.

34. Mischkneter nach einem der Ansprüche 22 bis 33, **dadurch gekennzeichnet, dass** zwischen dem Rohteig-Austragsabschnitt des Mischkneters und dem Rohteig-Zufuhrabschnitt ein Entgasungsbereich mit Vakuumanschluss angeordnet ist.

35. Mischkneter nach einem der Ansprüche 22 bis 34, **dadurch gekennzeichnet, dass** sich an die Einwellen-Schneckenpresse bzw. an die Zahnradpumpe bzw. an das Walzenpaar eine Formgebungseinheit (30) zur Formung des austretenden Teiges anschliesst.

36. Mischkneter nach Anspruch 35, **dadurch gekennzeichnet, dass** die Formgebungseinheit eine Heizeinheit zum kurzzeitigen Aufheizen des durch sie hindurchtretenden Teiges aufweist.

37. Mischkneter nach Anspruch 36, **dadurch gekennzeichnet, dass** der Heizeinheit eine Kühleinheit zum sofortigen Abkühlen des in der Heizeinheit aufgeheizten Teiges in der Teigförderrichtung nachgeschaltet ist.

38. Mischkneter nach Anspruch 36 oder 37, **dadurch gekennzeichnet, dass** die Heizeinheit förderaufseitig und förderabseitig thermisch isoliert ist.

39. Verfahren zur Herstellung von Teig, insbesondere Teigwarenteig aus stärke- und klebereiweisshaltigen Rohmaterialien, wie Mehl, Griess oder Dunst, unter Verwendung eines Mischkneters gemäss einem der Ansprüche 1 bis 39, welches die folgenden Schritte aufweist:
a) Erstellen einer Rohmaterial-Trockenmischung;
b) Eindosieren der Rohmaterial-Trockenmischung in den Rohmaterial-Zufuhrabschnitt des Mischkneters;
c) Eindosieren von Wasser in den Mischkneter;
d) Benetzen der Rohmaterial-Trockenmischung innerhalb eines Benetzungsabschnitts des Mischkneters mit Wasser mit oder ohne zusätzlichem Dämpfen;
e) Mischen der benetzten und ggfs. gedämpften Rohmaterial-Mischung innerhalb eines Mischungsabschnitts des Mischkneters zu einem Rohteig;
g) peristaltisches Kneten des Rohteiges in einem Peristaltik-Mischbereich des Mischkneters;
h) Entgasen des Rohteiges in einem Entgasungsbereich des Mischkneters;
i) Komprimieren des Rohteiges und Aufbauen von Druck im Innern des Rohteiges; und
j) Formen des so gewonnenen Teiges.

40. Verfahren nach Anspruch 39, **dadurch gekennzeichnet, dass** vor dem Schritt des peristaltischen Knetens (Schritt g) ein Schritt zum Walken bzw. Wirken des Rohteiges (Schritt f) innerhalb eines Walk- bzw. Wirkabschnitts des Mischkneters erfolgt.

41. Verfahren nach Anspruch 39 oder 40, **dadurch gekennzeichnet, dass** die Temperatur der Rohmaterial-Mischung, des Rohteiges bzw. des Teiges während des Verfahrens stets unter 50°C gehalten wird.

42. Verfahren nach Anspruch 40, **dadurch gekennzeichnet, dass** die maximale Temperatur während des Verfahrens kleiner als 40°C, vorzugsweise kleiner als 38°C° ist.

43. Verfahren nach einem der Ansprüche 39 bis 41, **dadurch gekennzeichnet, dass** der spezifische mechanische Energieeintrag im Mischkneter (Leistung des Mischkneters / Nassteig-Massendurchsatz) kleiner als 25 kJ/kg, vorzugsweise kleiner als 20 kJ/kg und am bevorzugtesten kleiner als 15 kJ/kg ist.

44. Verfahren nach einem der Ansprüche 40 bis 43, **dadurch gekennzeichnet, dass** das Entgasen des Rohteiges (Schritt h) bei einem Druck von weniger als 200 mbar erfolgt.

45. Verfahren nach Anspruch 44, **dadurch gekennzeichnet, dass** das Entgasen des Rohteiges (Schritt h) bei einem Druck von weniger als 150 mbar, vorzugsweise von weniger als 100 mbar, erfolgt.

46. Verfahren nach einem der Ansprüche 39 bis 45 zur Herstellung von Teig, insbesondere Teigwarenteig, aus stärkehaltigen, klebereiweissfreien Rohmaterialien, wie Mehl, Griess oder Dunst, unter Verwendung eines Mischkneters gemäss einem der Ansprüche 1 bis 41, welches zwischen dem Schritt des Komprimierens des Rohteiges und Aufbauen von Druck im Innern des Rohteiges (Schritt i) und dem Schritt des Formens des so gewonnenen Teiges (Schritt j) einen Schritt zum kurzzeitigen Erhitzen des Teiges auf eine Temperatur oberhalb seiner Gelatinierungstemperatur, vorzugsweise oberhalb von 65°C, insbesondere auf eine Temperatur im Bereich von 68°C bis 75°C, aufweist.

47. Verfahren nach einem der Ansprüche 42 bis 45 zur Herstellung von Teig, insbesondere Teigwarenteig, aus stärkehaltigen, klebereiweissfreien Rohmaterialien, wie Mehl, Griess oder Dunst, unter Verwendung eines Mischkneters gemäss einem der Ansprüche 39 bis 41, welches während des Schrittes des Formens des so gewonnenen Teiges (Schritt j) einen Schritt zum kurzzeitigen Erhitzen des Teiges auf eine Temperatur oberhalb seiner Gelatinierungstemperatur, vorzugsweise oberhalb von 65°C, insbesondere auf eine Temperatur im Bereich von 68°C bis 75°C, aufweist.

48. Verfahren nach Anspruch 47, **dadurch gekennzeichnet, dass** während des kurzzeitigen Erhitzens des Teiges der geformte Teig, insbesondere die geformte Langware oder die geformte Kurzware, nur an seiner Oberfläche auf eine Temperatur oberhalb der Gelatinierungstemperatur, vorzugsweise oberhalb von 65°C, insbesondere auf eine Temperatur im Bereich von 68°C bis 75°C, erhitzt wird.

49. Verfahren nach einem der Ansprüche 42 bis 48, **dadurch gekennzeichnet, dass** das Walken bzw. Wirken des Rohteiges (Schritt f) durch Zerteilen und anschliessendes Vereinen der Rohteig-Strömung in dem Walk- und Wirkabschnitt des Mischkneters erfolgt.

50. Verfahren nach Anspruch 49, **dadurch gekennzeichnet, dass** das Walken bzw. Wirken des Rohteiges (Schritt f) durch mehrmalig aufeinanderfolgendes abwechselndes Zerteilen und Vereinen der Rohteig-Strömung in dem Walk- und Wirkabschnitt des Mischkneters erfolgt.

51. Verfahren nach einem der Ansprüche 42 bis 50, **dadurch gekennzeichnet, dass** das peristaltische Mischen des Rohteiges (Schritt g) durch Dehnen und Drücken sowie anschliessendes Entspannen und Rückvermischen der Rohteig-Strömung in dem Peristaltik-Mischbereich des Mischkneters erfolgt.

52. Verfahren nach Anspruch 51, **dadurch gekennzeichnet, dass** das peristaltische Mischen des Rohteiges (Schritt g) durch mehrmalig aufeinanderfolgendes abwechselndes Dehnen und Komprimieren ("Stauchen") der Rohteig-Strömung in dem Peristaltik-Mischbereich des Mischkneters erfolgt.

53. Verfahren nach einem der Ansprüche 46 bis 52, **dadurch gekennzeichnet, dass** als stärkehaltiges, klebereiweissfreies Rohmaterial mindestens ein Material aus der folgenden Gruppe verwendet wird:
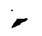 Mais, Reis, Hirse, Gerste, jeweils in Form von Griess, Mehl oder Dunst;
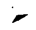 Stärke, insbesondere Mais-, Reis-, Hirse-, Gersten-Stärke, Kartoffelstärke, Tapiokastärke, Palmstärke, Mungbean-Stärke, Bihoon-Stärke, Mihoon-Stärke, etc.

## Claims

1. A mixing kneader (1) for manufacturing raw dough, in particular consisting of starch and gluten-containing raw materials like flour, semolina or mist, with a casing (2), a raw material supply section, a raw dough discharge section as well as at least two cooperating working shafts (3, 4) that extend in a conveying direction or axial direction from the raw material supply section to the raw material discharge section inside the casing, and accommodate mixing and kneading elements along with force-conveying elements (5), **characterized in that** the mixing kneader cavity (6) has an area (8) for peristaltic dough kneading upstream from its raw dough discharge section (7) viewed in the conveying direction, which has at least one respective narrowing axial cavity area (8a) in which the free cross sectional surface of the cavity (6) between the surface of the working shafts (3, 4) and the inner wall of the casing (2) as measured perpendicular to the axial direction tapers from an area with a large free cross sectional surface to an area with a small free cross sectional surface along the axial direction.

2. The mixing kneader according to claim 1, **characterized in that** the area (8) of the mixing kneader cavity (4) for peristaltic dough kneading additionally has at least one expanding axial cavity area (8c), which adjoins the narrowing axial cavity area (8a) downstream, and in which the free cross sectional surface of the cavity (6) between the surface of the working shafts (3, 4) and the inner wall of the casing (2) as measured perpendicular to the axial direction expands from an area with a small free cross sectional surface to an area with a large free cross sectional surface along the axial direction.

3. The mixing kneader according to claim 2, **characterized in that** the area (8) of the mixing kneader cavity (6) for peristaltic dough kneading has an axial bottleneck area (8b) between the narrowing axial cavity area (8a) and the expanding axial cavity area (8c), in which the free cross sectional surface of the cavity between the surface of the working shafts and the inner wall of the casing as measured perpendicular to the axial direction has a minimal value along the axial direction.

4. The mixing kneader according to claim 2, **characterized in that** the area of the mixing kneader cavity for peristaltic dough kneading has at least one, preferably two to six, axially consecutive narrowed cavity segments (11), which each consist of a narrowing axial cavity area (8a) and an expanding axial cavity area (8c), and are used for peristaltic dough kneading.

5. The mixing kneader according to claim 3, **characterized in that** the area of the mixing kneader cavity for peristaltic dough kneading has at least one, preferably two to six, axially consecutive narrowed cavity areas (11), which each consist of a narrowing axial cavity area (8a), an axial bottleneck area (8b) and an expanding axial cavity area (83), and are used for peristaltic dough kneading.

6. The mixing kneader according to one of the preceding claims, **characterized in that** the respective end section of the working shafts (3, 4) is rotationally symmetrical in design upstream from the raw dough discharge section.

7. The mixing kneader according to one of the preceding claims, **characterized in that** the areas of the casing inner wall opposite the surfaces of the working shafts at the end section of the casing (2) are rotationally symmetrical in design upstream from the raw dough discharge section.

8. The mixing kneader according to one of claims 4 to 7, **characterized in that** the several sequential narrowed cavity segments (11) are formed by several axially consecutive expanded cross sectional segments (3a, 4a) of the working shafts, between which is located a respective non-expanded axial area of the working shafts (3b, 4b).

9. The mixing kneader according to one of claims 4 to 8, **characterized in that that** the several sequential narrowed cavity segments (11) are formed by several axially consecutive narrowed cross sectional segments of the casing interior.

10. The mixing kneader according to claim 8 or 9, **characterized in that** the expanded cross sectional segments (3a) of the working shafts (3, 4) are axially arranged in such a way that, given adjacent working shafts (3, 4), the expanded cross sectional segments (31) of a working shaft (3) are at an axial location where the non-expanded axial areas (4b) of an adjacent working shaft (4) are situated.

11. The mixing kneader according to one of claims 8 to 10, **characterized in that** the axial distance (A) of consecutive narrowed cavity segments (11) gradually increases along the axial direction.

12. The mixing kneader according to one of the preceding claims, **characterized in that** it has an area for dough mixing and conveyance (10) upstream from its area (8) for peristaltic dough kneading, where consecutively axial areas with conveying screws (5) and axial areas with mixing blocks are arranged on the working shafts (3, 4) along the conveying direction.

13. The mixing kneader according to claim 12, **characterized in that** the conveying screw areas and the mixing block areas alternate on the working shafts.

14. The mixing kneader according to claim 13, **characterized in that** the axial distance of consecutive mixing block areas or the axial length of the respective conveying screw area lying in between increases along the conveying direction.

15. The mixing kneader according to one of claims 12 to 14, **characterized in that** the area for dough mixing and conveyance has two to four conveying screw areas and two to four mixing block areas.

16. The mixing kneader according to one of the preceding claims, **characterized in that** it has an area (9) for tumbling or working the dough upstream from its area for peristaltic dough kneading, where tumbling and working screws (9a) are arranged on the working shafts (3, 4) along the conveying direction, with passageways (9b) extending in an axial direction in their screw webs that fluidically interconnect the adjacent threads of a spiral.

17. The mixing kneader according to claim 16, **characterized in that** passageways are jaggedly arranged on the comb of the screw webs.

18. The mixing kneader according to claim 16 or 17, **characterized in that** passageways are arranged like windows between the core and the comb of the screw webs.

19. The mixing kneader according to one of the preceding claims, **characterized in that** it has several, in particular two, synchronously running working shafts (3, 4) .

20. The mixing kneader according to one of claims 1 to 19, **characterized in that** it has several, in particular two, working shafts, wherein adjacent working shafts run in opposite directions.

21. The mixing kneader according to one of the preceding claims, **characterized in that** the area (8) for peristaltic dough kneading of the surface of the working shafts and/or the inner wall of the casing is covered by an anti-adhesive layer, preferably made out of Teflon.

22. The mixing kneader according to one of the preceding claims, **characterized in that** it is connected via its raw dough discharge section with the raw dough supply section of a gear pump.

23. The mixing kneader according to one of the preceding claims, **characterized in that** it is connected via its raw dough discharge section with the raw dough supply section of a roll pair.

24. The mixing kneader according to one of the preceding claims, **characterized in that** it is connected via its raw dough discharge section with the raw dough supply section of a single-screw extruder (20).

25. The mixing kneader according to claim 24, wherein the single-screw extruder (20) has a casing (22), a raw dough supply section, a dough discharge section as well as a working shaft (23), which extends from the raw dough supply section to the dough discharge section within the casing in a conveying direction or axial direction, and has force-conveying elements (25), **characterized in that** the cavity (26) of the single-screw extruder (20) has an area (28) upstream from its dough discharge section for peristaltic dough kneading, which has at least one narrowing axial cavity area (28a), in which the free cross sectional surface of the cavity (26) between the surface of the working shaft (23) and the inner wall of the casing (22) as measured perpendicular to the axial direction tapers from an area with a large free cross sectional surface to an area with a small free cross sectional surface along the axial direction.

26. The mixing kneader according to claim 25, **characterized in that** the area (28) of the cavity (26) of the single-screw extruder (20) for peristaltic dough kneading also has at least one expanding axial cavity area (28c), which abuts the narrowing axial cavity area (28a) downstream, and in which the free cross sectional surface of the cavity (26) between the surface of the working shaft (23) and the inner wall of the casing (22) as measured perpendicular to the axial direction increases from an area with a small free cross sectional surface to an area with a large free cross sectional surface along the axial direction.

27. The mixing kneader according to claim 26, **characterized in that** the area (28) of the cavity (26) of the single-screw extruder for peristaltic dough kneading has an axial bottleneck area (28b) between the narrowing axial cavity area (28a) and the expanding axial cavity area (28c), in which the free cross sectional surface of the cavity (26) between the surface of the working shaft (23) and the inner wall of the casing (22) as measured perpendicular to the axial direction has a minimal value along the axial direction.

28. The mixing kneader according to claim 26, **characterized in that** the area (28) of the cavity (26) of the single-screw extruder (20) for peristaltic dough kneading has at least one, preferably two to six, axially consecutive narrowed cavity segments, which each consist of a narrowing axial cavity area (28a) and an expanding axial cavity area (28c), and are used for peristaltic dough kneading.

29. The mixing kneader according to claim 27, **characterized in that** the area of the cavity of the single-screw extruder (20) for peristaltic dough kneading has at least one, preferably two to six, axially consecutive narrowed cavity areas (21), which each consist of a narrowing axial cavity area (28a), an axial bottleneck area (28b) and an expanding axial cavity area (28c), and are used for peristaltic dough kneading.

30. The mixing kneader according to one of claims 25 to 29, **characterized in that** the working shaft 23 of the single-screw extruder 20 is rotationally symmetrical in design upstream from the dough discharge section.

31. The mixing kneader according to one of claims 25 to 30, **characterized in that** the area of the casing inner wall of the single screw extruder (20) is rotationally symmetrical in design at the end section of the casing (22) upstream from the dough discharge section.

32. The mixing kneader according to one of claims 28 to 31, **characterized in that** the several consecutive narrowed cavity segments (21) of the single-screw extruder (20) are formed by several axially consecutive expanded cross sectional segments (23a, 23b) of the working shaft, between which is located a respective non-expanded axial area of the working shaft.

33. The mixing kneader according to one of claims 28 to 32, **characterized in that** the several consecutive narrowed cavity segments of the single-screw extruder (20) are formed by several axially consecutive narrowed cross sectional segments of the casing interior.

34. The mixing kneader according to one of claims 22 to 33, **characterized in that** a degassing area with vacuum connection is arranged between the raw dough discharge section of the mixing kneader and the raw dough supply section.

35. The mixing kneader according to one of claims 22 to 40, **characterized in that** a molding unit (30) for molding the exiting dough follows the single-screw extruder or gear pump or roll pair.

36. The mixing kneader according to claim 35, **characterized in that** the molding unit has a heating unit for briefly heating the dough passing through it.

37. The mixing kneader according to claim 36, **characterized in that** a cooling unit for immediately cooling the dough heated in the heating unit in the dough conveying direction is connected in series to the heating unit.

38. The mixing kneader according to claim 36 or 37, **characterized in that** the heating unit is thermally isolated upstream and downstream.

39. A method for manufacturing a dough, in particular pasta dough, out of starch and gluten-containing raw materials, like flour, semolina or mist, using a mixing kneader according to one of claims 1 to 39, which involves the following steps:
a) Fabricating a raw material dry mixture;
b) Metering the raw material dry mixture into the raw material supply section of the mixing kneader;
c) Metering water into the mixing kneader;
d) Wetting the raw material dry mixture within a wetting section of the mixing kneader using water, with or without additional evaporation;
e) Mixing the wetted and, if necessary, evaporated raw material mixture within a mixing section of the mixing kneader to form a raw dough;
g) Peristaltically mixing the raw dough in a peristaltic mixing area of the mixing kneader;
h) Degassing the raw dough in a degassing area of the mixing kneader;
i) Compressing the raw dough and building up pressure inside the raw dough; and
j) Molding the dough obtained in this way.

40. The method according to claim 39, **characterized in that** a step for tumbling or working the raw dough (step f) within a tumbling or working section of the mixing kneader takes place before the peristaltic kneading step (step g).

41. The method according to claim 39 or 40, **characterized in that** the temperature of the raw material mixture, raw dough or dough is always kept below 50°C during the procedure.

42. The method according to claim 40, **characterized in that** the maximum temperature is less than 40°C, preferably less than 38°C.

43. The method according to one of claims 39 to 41, **characterized in that** the specific mechanical energy input in the mixing kneader (power of mixing kneader/wet dough mass throughput) is less than 25 kJ/kg, preferably less than 20 kJ/kg, and most preferably less than 15 kJ/kg.

44. The method according to one of claims 40 to 43, **characterized in that** the raw dough is degassed (step h) at a pressure of less than 200 mbar.

45. The method according to claim 44, **characterized in that** the raw dough is degassed (step h) at a pressure of less than 150 mbar, preferably less than 100 mbar.

46. The method according to one of claims 39 to 45 for manufacturing a dough, in particular pasta dough, out of starch and gluten-containing raw materials, like flour, semolina or mist, using a mixing kneader according to one of claims 1 to 41, which has a step for briefly heating the dough to a temperature above its gelatinization point, preferably above 65°C, in particular to a temperature ranging from 68°C to 75°C, between the step involving raw dough compression and pressure buildup inside the raw dough (step i) and the step of molding the resultant dough (step j).

47. The method according to one of claims 42 to 45 for manufacturing a dough, in particular pasta dough, out of starch and gluten-containing raw materials, like flour, semolina or mist, using a mixing kneader according to one of claims 39 to 41, which has a step for briefly heating the dough to a temperature above its gelatinization point, preferably above 65°C, in particular to a temperature ranging from 68°C to 75°C, during the step of molding the resultant dough (step j).

48. The method according to claim 47, **characterized in that** the molded dough, in particular the molded long product or molded short product, is only superficially heated to a temperature above the gelatinization point, preferably above 65°C, in particular to a temperature ranging from 68°C to 75°C, during the brief heating of the dough..

49. The method according to one of claims 42 to 48, **characterized in that** the raw dough is tumbled or worked (step f) by splitting and then combining the raw dough stream in the tumbling or working section of the mixing kneader.

50. The method according to claim 49, **characterized in that** the raw dough is tumbled or worked (step f) by consecutively splitting and then combining the raw dough stream repeatedly in the tumbling or working section of the mixing kneader.

51. The method according to one of claims 42 to 50, **characterized in that** the raw dough is peristaltically mixed (step g) by expanding and pressing and then relaxing and remixing the raw dough stream in the peristaltic mixing area of the mixing kneader.

52. The method according to claim 51, **characterized in that** the raw dough is peristaltically mixed (step g) by consecutively expanding and pressing and then relaxing and remixing the raw dough stream repeatedly in the peristaltic mixing area of the mixing kneader.

53. The method according to one of claims 46 to 52, **characterized in that** at least one material from the following group is used as the starch-containing, gluten-free raw material:
• maize, rice, millet, barley, in the respective form of semolina, flour or mist;
• starch, in particular maize, rice, millet, barley starch, potato starch, tapioca starch, palm starch, mung bean starch, bihoon starch, mihoon starch, etc.

## Revendications

1. Malaxeur (1) pour la fabrication de pâte crue, notamment à partir de matières premières contenant de l'amidon et du gluten, comme de la farine, de la semoule ou de la recoupe, avec un carter (2), une section d'alimentation de matière première, une section d'évacuation de la pâte crue, ainsi qu'au moins deux arbres moteurs (3, 4) coopérant mutuellement, s'étendant de la section d'alimentation en matière première vers la section d'évacuation de la pâte crue à l'intérieur du carter dans un sens de transport ou dans un sens axial, sur lesquels sont disposés des éléments de mélange et de malaxage, ainsi que des éléments de transport forcé (5), **caractérisé en ce que** la cavité du malaxeur (6) comporte en amont de sa section d'évacuation de la pâte crue (7) une zone (7) pour le malaxage péristaltique de la pâte, qui comporte respectivement au moins une zone de cavité axiale qui se rétrécit (8a) dans laquelle la section transversale libre de la cavité (6) entre la surface des arbres moteurs (3, 4) et la paroi interne du carter (2), mesurée à la perpendiculaire du sens axial décroît d'une zone à grande section transversale libre en une zone à petite section transversale libre, le long du sens axial.

2. Malaxeur selon la revendication 1, **caractérisé en ce que** dans sa zone (8) pour le malaxage péristaltique de la pâte, la cavité du malaxeur (4) comporte par ailleurs respectivement au moins une zone de cavité axiale s'élargissant (8c), qui en aval se raccorde sur la zone de cavité axiale se rétrécissant (8a) et dans laquelle la surface de section transversale libre de la cavité (6) entre la surface des arbres moteurs (3, 4) et la paroi interne du carter (2), mesurée à la perpendiculaire du sens axial s'accroît d'une zone avec une petite section transversale libre en une zone avec une grande section transversale libre, le long du sens axial.

3. Malaxeur selon la revendication 2, **caractérisé en ce que** dans sa zone (8) pour le malaxage péristaltique de la pâte, la cavité du malaxeur (6) comporte entre la zone de cavité axiale se rétrécissant (8a) et la zone de cavité axiale s'élargissant (8c) une zone axiale de goulot (8b) dans laquelle la section transversale libre de la cavité entre la surface des arbres moteurs et la paroi interne du carter, mesurée à la perpendiculaire du sens axial a une valeur minimale le long du sens axial.

4. Malaxeur selon la revendication 2, **caractérisé en ce que** dans sa zone (8) pour le malaxage péristaltique de la pâte, la cavité du malaxeur comporte au moins un, de préférence de deux à six rétrécissements de la cavité (11) consécutifs dans le sens axial, qui sont respectivement constitués d'une zone de cavité axiale se rétrécissant (8a) et d'une zone de cavité axiale s'élargissant (8c) et qui sont destinés au malaxage péristaltique de pâte.

5. Malaxeur selon la revendication 3, **caractérisé en ce que** dans sa zone (8) pour le malaxage péristaltique de la pâte, la cavité du malaxeur comporte au moins un, de préférence de deux à six rétrécissements de la cavité (11) consécutifs dans le sens axial, qui sont respectivement constitués d'une zone de cavité axiale se rétrécissant (8a), d'une zone axiale de goulot (8b) et d'une zone de cavité axiale s'élargissant (8c) et qui sont destinés au malaxage péristaltique de pâte.

6. Malaxeur selon l'une quelconque des revendications précédentes, **caractérisé en ce que** sur leur zone d'extrémité en amont de la section d'évacuation de la pâte crue, les arbres moteurs (3, 4) sont conçus de façon symétrique en rotation.

7. Malaxeur selon l'une quelconque des revendications précédentes, **caractérisé en ce que** les zones de la paroi intérieure du carter opposées aux surfaces des arbres moteurs sont conçues de façon symétrique en rotation sur la section d'extrémité du carter (2), en amont de la section d'évacuation de la pâte crue.

8. Malaxeur selon l'une quelconque des revendications 4 à 7, **caractérisé en ce que** les plusieurs rétrécissements de cavité consécutifs (11) sont formés de plusieurs élargissements consécutifs dans le sens axial de la section transversale des arbres moteurs (3a, 4a), entre lesquels se trouve respectivement une zone axiale non élargie des arbres moteurs (3b, 4b).

9. Malaxeur selon l'une quelconque des revendications 4 à 8, **caractérisé en ce que** les plusieurs rétrécissements de cavité consécutifs (11) sont formés par plusieurs rétrécissements consécutifs le long du sens axial de la section transversale de l'intérieur du carter.

10. Malaxeur selon la revendication 4 à 8, **caractérisé en ce que** sur les arbres moteurs (3, 4), les élargissements de la section transversale (3a) sont disposés de façon telle dans le sens axial, que sur des arbres moteurs voisins (3, 4), les élargissements de la section transversale (31) d'un arbre moteur (3) se trouvent sur un emplacement axial sur lequel se trouve les zones axiales non élargies (4b) d'un arbre moteur voisin (4).

11. Malaxeur selon l'une quelconque des revendications 8 à 10, **caractérisé en ce que** la distance axiale (A) de rétrécissements de cavité consécutifs (11) s'accroît au fur et à mesure le long du sens axial.

12. Malaxeur selon l'une quelconque des revendications précédentes, **caractérisé en ce qu'**en amont de sa zone (8) pour le malaxage péristaltique de la pâte, il comporte une zone pour le mélange et le transport de la pâte (10) dans laquelle des zones axiales consécutives avec des hélices transporteuses (5) et des zones axiales avec des blocs mélangeurs sont disposées sur les arbres moteurs (3, 4) le long du sens de transport.

13. Malaxeur selon la revendication 12, **caractérisé en ce que** les zones avec les hélices transporteuses et les zones avec les blocs mélangeurs se suivent en alternance sur les arbres moteurs.

14. Malaxeur selon la revendication 13, **caractérisé en ce que** la distance axiale entre des zones consécutives de blocs mélangeurs ou la longueur axiale de la zone respective intermédiaire avec les hélices transporteuses s'accroît le long du sens de transport.

15. Malaxeur selon l'une quelconque des revendications 12 à 14, **caractérisé en ce que** la zone pour le mélange et le transport de la pâte comporte de deux à quatre zones d'hélices transporteuses et de deux à quatre zones de blocs mélangeurs.

16. Malaxeur selon l'une quelconque des revendications précédentes, **caractérisé en ce qu'**en amont de sa zone pour le malaxage péristaltique de la pâte (9), il comporte sur les arbres moteurs (3, 4), le long du sens de transport une zone (9) d'assouplissement ou de pétrissage de la pâte, dans laquelle des vis sans fin d'assouplissement ou de pétrissage (9a) qui sont munies sur leur crêtes de vis de passages (9b) s'étendant dans le sens axial, par l'intermédiaire desquels des spires voisines d'un pas de vis sont en liaison par fluide sont disposées sur les arbres moteurs (3 , 4).

17. Malaxeur selon la revendication 16, **caractérisé en ce que** des passages sont disposés à la manière de brèches sur l'arête des crêtes de vis.

18. Malaxeur selon la revendication 16 ou 17, **caractérisé en ce que** des passages sont disposés à la manière de fenêtres entre le noyau et l'arête des crêtes de vis.

19. Malaxeur selon l'une quelconque des revendications précédentes, **caractérisé en ce qu'**il comporte plusieurs, notamment deux arbres moteurs synchrones (3, 4).

20. Malaxeur selon l'une quelconque des revendications 1 à 19, **caractérisé en ce qu'**il comporte plusieurs, notamment deux arbres moteurs dont respectivement les arbres moteurs voisins sont synchrones.

21. Malaxeur selon l'une quelconque des revendications précédentes, **caractérisé en ce que** dans sa zone (8) pour le malaxage péristaltique de la pâte, la surface des arbres moteurs et/ou celle de la paroi interne du carter est revêtue d'une couche antiadhésive, de préférence en téflon.

22. Malaxeur selon l'une quelconque des revendications précédentes, **caractérisé en ce que** par l'intermédiaire de sa section d'évacuation de la pâte crue, il est relié à la section d'alimentation en pâte crue d'une pompe à engrenages.

23. Malaxeur selon l'une quelconque revendications précédentes, **caractérisé en ce que** par l'intermédiaire de sa section d'évacuation de la pâte crue, il est relié à la section d'alimentation en pâte crue d'une paire de cylindres.

24. Malaxeur selon l'une quelconque des revendications précédentes, **caractérisé en ce que** par l'intermédiaire de sa section d'évacuation de la pâte crue, il est relié à la section d'alimentation en pâte crue d'une boudineuse à vis à un arbre (20).

25. Malaxeur selon la revendication 24, la boudineuse à vis à un arbre (20) comportant un carter (22), une section d'alimentation en pâte crue, une section d'évacuation de la pâte, ainsi qu'un arbre moteur (23) s'étendant de la section d'alimentation en pâte crue vers la section d'évacuation de pâte, à l'intérieur du carter dans un sens de transport ou dans un sens axial et sur lequel sont disposés des éléments de transport forcé (25), **caractérisé en ce que** la cavité (26) de la boudineuse à vis à un arbre (20) comporte en amont de sa section d'évacuation de la pâte une zone (26) pour le malaxage péristaltique de la pâte, qui comporte respectivement au moins une zone de cavité axiale se rétrécissant (28a), dans laquelle la surface de section transversale libre mesurée à la perpendiculaire du sens axial de la cavité (26), entre la surface de l'arbre moteur (23) et la paroi interne du carter (22) décroît d'une zone avec une grande section transversale libre en une zone avec une petite section transversale libre, le long du sens axial.

26. Malaxeur selon la revendication 25, **caractérisé en ce que** dans sa zone (28) pour le malaxage péristaltique de la pâte, la cavité (26) de la boudineuse à vis à un arbre (20) comporte respectivement par ailleurs au moins une zone de cavité axiale s'élargissant (28c) qui se raccorde en aval sur la zone de cavité axiale se rétrécissant (28a) et dans laquelle la surface de section transversale libre mesurée à la perpendiculaire du sens axial de la cavité (26) entre la surface de l'arbre moteur (23) et la paroi interne du carter (22) s'accroît d'une zone avec une petite section transversale libre en une zone avec grande section transversale libre, le long du sens axial.

27. Malaxeur selon la revendication 26, **caractérisé en ce que** dans sa zone (28) pour le malaxage péristaltique de la pâte, la cavité de la boudineuse à vis à un arbre (20) comporte entre la zone de cavité axiale se rétrécissant (28a) et la zone de cavité axiale s'élargissant (28c) une zone axiale de goulot (28b) dans laquelle la section transversale libre de la cavité (26) entre la surface de l'arbre moteur (23) et la paroi interne du carter (22), mesurée à la perpendiculaire du sens axial a une valeur minimale le long du sens axial.

28. Malaxeur selon la revendication 26, **caractérisé en ce que** dans sa zone (28) pour le malaxage péristaltique de la pâte, la cavité de la boudineuse à vis à un arbre (20) comporte au moins un, de préférence de deux à six rétrécissements de la cavité consécutifs dans le sens axial, qui sont respectivement constitués d'une zone de cavité axiale se rétrécissant (28a), et d'une zone de cavité axiale s'élargissant (28c) et qui sont destinés au malaxage péristaltique de pâte.

29. Malaxeur selon la revendication 27, **caractérisé en ce que** dans sa zone pour le malaxage péristaltique de la pâte, la cavité de la boudineuse à vis à un arbre (20) comporte au moins un, de préférence de deux à six rétrécissements de la cavité (21) consécutifs dans le sens axial, qui sont respectivement constitués d'une zone de cavité axiale se rétrécissant (28a), d'une zone axiale de goulot (28b) et d'une zone de cavité axiale s'élargissant (28c) et qui sont destinés au malaxage péristaltique de pâte.

30. Malaxeur selon l'une quelconque des revendications 25 à 29, **caractérisé en ce que** sur sa zone d'extrémité en amont de la section d'évacuation de la pâte, l'arbre moteur (23) de la boudineuse à vis à un arbre (20) est conçu de façon symétrique en rotation.

31. Malaxeur selon l'une quelconque des revendications 25 à 30, **caractérisé en ce que** la zone de la paroi intérieure de la boudineuse à vis à un arbre (22) est conçue de façon symétrique en rotation sur la section d'extrémité du carter (22), en amont de la section d'évacuation de la pâte crue.

32. Malaxeur selon l'une quelconque des revendications 28 à 31, **caractérisé en ce que** les plusieurs rétrécissements de cavité consécutifs (21) de la boudineuse à vis à un arbre (22) sont formés de plusieurs élargissements consécutifs dans le sens axial de la section transversale (23a, 24a) de l'arbre moteur, entre lesquels se trouve respectivement une zone axiale non élargie de l'arbre moteur.

33. Malaxeur selon l'une quelconque des revendications 28 à 32, **caractérisé en ce que** les plusieurs rétrécissements consécutifs de la cavité de la boudineuse à vis à un arbre (22) sont formés par plusieurs rétrécissements consécutifs le long du sens axial de la section transversale de l'intérieur du carter.

34. Malaxeur selon l'une quelconque des revendications 22 à 33, **caractérisé en ce qu'**une zone de dégazage avec un raccord sur le vide est disposée entre la section d'évacuation de pâte crue du malaxeur et la section d'alimentation en pâte crue.

35. Malaxeur selon une quelconque des revendications 22 à 25, **caractérisé en ce qu'**une unité de façonnage (30) pour façonner la pâte à sa sortie se raccorde sur la boudineuse à vis à un arbre ou sur la pompe à engrenages ou sur la paire de cylindres.

36. Malaxeur selon la revendication 35, **caractérisé en ce que** l'unité de façonnage comporte une unité de chauffage pour un bref échauffement de la pâte qui la traverse.

37. Malaxeur selon la revendication 36, **caractérisé en ce qu'**une unité de refroidissement, pour le refroidissement immédiat de la pâte échauffée dans l'unité de chauffage est montée en aval de l'unité de chauffage dans le sens de transport de la pâte.

38. Mélangeur selon la revendication 36 ou 37, **caractérisé en ce que** l'unité de chauffage comporte une isolation thermique en amont et en aval.

39. Procédé de fabrication de pâte, notamment de pâte pour pâtes alimentaires à partir de matières premières contenant de l'amidon ou du gluten, comme de la farine, de la semoule de la recoupe, sous utilisation d'un malaxeur selon l'une quelconque des revendications 1 à 39, comportant les étapes suivantes
a) élaboration d'un mélange de matières premières sèches,
b) ajout dosé du mélange de matières premières sèches dans la section d'alimentation en matières premières du malaxeur ;
c) ajout dosé d'eau dans le malaxeur ;
d) humidification à l'eau du mélange de matières premières sèches à l'intérieur d'une section d'humidification du malaxeur, avec ou sans vaporisation supplémentaire ;
e) mélange en une pâte crue du mélange de matières premières humidifié et le cas échéant vaporisé à l'intérieur d'une section de mélange du malaxeur ;
g) malaxage péristaltique de la pâte crue dans une zone de mélange péristaltique du malaxeur ;
h) dégazage de la pâte crue dans une zone de dégazage du malaxeur ;
i) compression de la pâte crue et génération de pression à l'intérieur de la pâte crue ; et
j) façonnage de la pâte ainsi obtenue.

40. Procédé selon la revendication 39, **caractérisé en ce qu'**avant l'étape de malaxage péristaltique (étape g), on assiste à une étape d'assouplissement ou de pétrissage de la pâte crue (étape f), à l'intérieur d'une section d'assouplissement ou de pétrissage du malaxeur.

41. Procédé selon la revendication 36 ou 40, **caractérisé en ce que** la température du mélange de matières premières, de la pâte crue ou de la pâte au cours du procédé est toujours maintenue sous 50°C.

42. Procédé selon la revendication 40, **caractérisé en ce que** la température maximale pendant le procédé est inférieure à 40°C, de préférence inférieure 30°C.

43. Procédé selon l'une quelconque des revendications 39 à 41, **caractérisé en ce que** l'apport mécanique d'énergie spécifique dans le malaxeur (puissance du malaxeur/débit de la masse de pâte humide) est inférieur à 25 kJ/kg, de préférence inférieur à 20 kJ/kg et de façon particulièrement préférée inférieur à 15 kJ/kg .

44. Procédé selon l'une quelconque des revendications 40 à 43, **caractérisé en ce que** le dégazage de la pâte crue (étape h) est assuré sous une pression inférieure à 200 mbar.

45. Procédé selon la revendication 44, **caractérisé en ce que** le dégazage de la pâte crue (étape h) est assuré sous une pression inférieure à 150 mbar, de préférence inférieure à 100 mbar.

46. Procédé selon l'une quelconque des revendications 39 à 45 pour la fabrication de pâte, notamment de pâte pour pâtes alimentaires à partir de matières premières contenant de l'amidon et exemptes de gluten, comme de la farine, de la semoule ou de la recoupe, sous utilisation d'un malaxeur selon l'une quelconque des revendications 1 à 41, qui entre l'étape de compression de la pâte crue et de génération de pression à l'intérieur de la pâte crue (étape i) et l'étape de façonnage de la pâte ainsi obtenue (étape j) comporte une étape pour le bref échauffement de la pâte à une température supérieure à sa température de gélatinisation, de préférence supérieure à 65°C, notamment à une température située dans la plage de 68°C à 75°C.

47. Procédé selon l'une quelconque des revendications 42 à 45 pour la fabrication de pâte, notamment de pâte pour pâtes alimentaires à partir de matières premières contenant de l'amidon et exemptes de gluten, comme de la farine, de la semoule ou de la recoupe, sous utilisation d'un malaxeur selon l'une quelconque des revendications 39 à 41, qui pendant l'étape de façonnage de la pâte ainsi obtenue (étape i) comporte une étape pour le bref échauffement de la pâte à une température supérieure à sa température de gélatinisation, de préférence supérieure à 65°C, notamment à une température située dans la plage de 68°C à 75°C.

48. Procédé selon la revendication 47, **caractérisé en ce que** pendant le bref échauffement de la pâte, la pâte façonnée, notamment le produit allongé façonné ou le produit court façonné n'est échauffé que sur sa surface à une température supérieure à la température de gélatinisation, de préférence supérieure à 65°C, notamment à une température située dans la plage de 68°C à 75°C.

49. Procédé selon l'une quelconque des revendications 42 à 48, **caractérisé en ce que** l'assouplissement ou le pétrissage de la pâte crue (étape f) est assuré par division et par réunion consécutives du courant de pâte crue dans la section d'assouplissement et de pétrissage du malaxeur.

50. Procédé selon la revendication 49, **caractérisé en ce que** l'assouplissement ou le pétrissage de la pâte crue (étape f) est assuré par division et par réunion consécutives alternativement répétées du courant de pâte crue dans la section d'assouplissement et de pétrissage du malaxeur.

51. Procédé selon l'une quelconque des revendications 42 à 50, **caractérisé en ce que** le mélange péristaltique de la pâte crue (étape g) est assuré par extension et par pression, ainsi que par détente et remélange consécutifs du courant de pâte crue dans la section de mélange péristaltique du malaxeur.

52. Procédé selon la revendication 51, **caractérisé en ce que** le mélange péristaltique de la pâte crue (étape g) est assuré par extension et par compression (écrasement) consécutives alternativement répétées du courant de pâte crue dans la section de mélange péristaltique du malaxeur.

53. Procédé selon l'une quelconque des revendications 46 à 52, **caractérisé en ce qu'**en tant que matière première contenant de l'amidon et exempt de gluten, on utilise au moins une matière du groupe suivant :
- maïs, riz, millet, orge, respectivement sous forme de semoule, de farine ou de recoupe,
- amidon, notamment de maïs, de riz, de millet, amidon d'orge, fécule de pommes de terre, tapioca, sagou, amidon de soja vert, amidon de bihoon, amidon de mihoon, etc.
